# EUROPEAN PATENT SPECIFICATION

(11) **EP 2 574 502 B1**
(45) Date of publication and mention of the grant of the patent: **30.10.2019**
(21) Application number: 12186433.4
(22) Date of filing: 27.09.2012
(51) Int. Cl.: B60Q 1/08, B60Q 1/14

(54) **Vehicle headlamp control system**
Fahrzeugscheinwerfersteuersystem
Système de commande de phare de véhicule

(30) Priority: 30.09.2011 JP 2011216735; 12.10.2011 JP 2011224951
(43) Date of publication of application: 03.04.2013
(73) Proprietor: Koito Manufacturing Co., Ltd., Tokyo 108-8711 (JP)
(72) Inventor: Masuda, Takeshi, SHIZUOKA-SHI, SHIZUOKA (JP); Komatsu, Motohiro, SHIZUOKA-SHI, SHIZUOKA (JP); Tanaka, Hidetada, SHIZUOKA-SHI, SHIZUOKA (JP)
(74) Representative: Intès, Didier Gérard André

(56) References cited:
- DE-A1-102004 036 174
- DE-A1-102006 039 182
- US-A1- 2009 190 323

## Description

### Background to the Invention

The present invention relates to a vehicle headlamp control system.

A vehicle headlamp is known which includes a light source in which a plurality of light emitting elements (for example, light emitting diodes) is arranged into an array. An illumination range of a vehicle headlamp is defined as a light distribution pattern that is formed by light shone from a light source. However, in a vehicle headlamp including a light source which includes a plurality of light emitting elements in the way described above, a resulting light distribution pattern is divided into a plurality of partial areas. Then, when the plurality of light emitting elements that make up the light source are arranged so as to illuminate individually the corresponding partial areas which make up the illumination range of the vehicle headlamp, the plurality of partial areas can each be selectively put into an illuminated state and a non-illuminated state by controlling independently the individual light emitting elements to be turned on or off (for example, refer to JP-A-2009-218155).

In the vehicle headlamp having as the light source the light emitting element array in which the light emitting elements are controlled individually to be turned on or off, the necessity is obviated of providing a swivel mechanism for mechanically swiveling a lamp unit of the vehicle headlamp to shift the light distributing direction (the orientation of an optical axis of a lamp) sideways. Namely, in the vehicle headlamp having as the light source the light emitting element array, by controlling individually the plurality of light emitting elements that make up the light emitting element array to be turned on or off so as to shift the partial areas that are illuminated sideways within the illumination range in a swiveling fashion, the light distributing direction can be changed sideways without mechanically swiveling the lamp unit.

In a vehicle headlamp in which an illuminated area is shifted by mechanically swiveling a lamp unit by a swivel mechanism as described above, the illumination range is also shifted sideways together with the illuminated area when the lamp unit is swiveled by the swivel mechanism, and therefore, there is caused no change in illuminance of the illuminated area when the illuminated area is shifted. However, in the vehicle headlamp in which the illuminated area is shifted by controlling individually the plurality of light emitting elements to be turned on or off in the way described above, the orientation of the light emitting element array does not change even when the illuminated area is changed. Namely, the illumination range itself is not shifted, and therefore, there can be caused, for example, a situation in which part of the illuminated area moves out of the illumination range. Then, as this occurs, the portion of the illuminated area that is now out of the illumination range is illuminated in no way by any of the light emitting elements, resulting in a reduction in illuminance of the illuminated area.

More specifically, for example, when the illuminated area is swiveled to a right end portion of the illumination range, part of the illuminated area protrudes out of the illumination range from a right end of the illumination range. Then, this protruding part of the illuminated area is not illuminated by any of the light emitting elements that make up the light emitting element array. Consequently, as this occurs, the illuminance of the illuminated area drops below the illuminance thereof resulting before it was swiveled.

Furthermore, in the vehicle headlamp in which the illuminated area is shifted by controlling individually the plurality of light sources to be turned on or off in the way described above, compared with the vehicle headlamp in which the illuminated area is shifted by mechanically swiveling the lamp unit using the swivel mechanism, more various light distribution patterns can be formed within the illumination range. On the other hand, the load borne by the control system that deals with the light distribution control tends to be increased as the control becomes complex. Such an increase in load can be a cause for a reduction in responding speed of the control system for controlling the illuminated area, which causes fears that the driving safety is endangered.

DE 10 2006 039 182 A1, DE 10 2004 036174 A1 and US2009/190323 A1 describe other vehicle headlamps.

### Summary of the Invention

According to an aspect of the invention, there is provided a vehicle headlamp control system according to claim 1.

By having the characteristics described above, the vehicle headlamp control system according to the invention can change the illuminance distribution within the illuminated area before and after the swivel shift of the illuminated area. Furthermore, the vehicle headlamp control system according to the invention can illuminate appropriately and efficiently the whole of the field of view of the driver that changes according to the driving speed of the vehicle. Furthermore, by the vehicle headlamp control system according to the invention, the more efficient electronic swivel control can be selected for execution according to the driving conditions of the vehicle.

In the vehicle headlamp control system according to the invention, wherein the control means having the first control function are configured to control the illuminance of a predetermined partial area in an illuminated area after the swivel shift so that the illuminance is made higher than the illuminance of a partial area that corresponds to the predetermined partial area in the illuminated area before the swivel shift.

In the vehicle headlamp control system according to the invention, wherein the control means having the first control function are configured to control the illuminance of the illuminated area so that the illuminance before the swivel shift coincides with the illuminance after the swivel shift.

In the vehicle headlamp control system according to the invention, wherein the control means having the first control function are configured to control the illuminance so that the illuminance is increased more as the partial area lies closer to a position where a line of sight of the driver is predicted to exist.

In the vehicle headlamp control system according to the invention, further comprising: a storage unit configured to store in advance a plurality of illumination patterns of which illuminance distributions within illuminated areas after the swivel shift differ from each other, wherein the control means having the first control function configured to select one of the illumination patterns according to a driving condition of the vehicle. By providing the storage unit in the vehicle headlamp control system, the control means can perform with less processing load.

In the vehicle headlamp control system according to the invention, wherein the plurality of light sources is a light source for high beam.

In the vehicle headlamp control system according to the invention, wherein the control means having the second control function are configured to control the area of the illuminated area so that the area becomes smaller as the driving speed becomes higher. As this occurs, the field of view of the driver that gets narrower can be illuminated with high luminous intensity without increasing the electric power load at the light sources.

In the vehicle headlamp control system according to the invention, wherein the control means having the second control function executes a control to swivel shift the position of the illuminated area within the illumination range while maintaining an illuminance distribution within the illuminated area when the driving speed exceeds a predetermined value. By doing this, the light distributing direction can be changed while following sufficiently the turning of the vehicle during high speed driving.

In the vehicle headlamp control system according to the invention, wherein the control means having the second control function are configured to change the illuminance distribution within the illuminated area while maintaining the position of the illuminated area within the illumination range when the driving speed is lowered below the predetermined value and to maintain a total amount of currents supplied to the light sources that correspond to the illuminated area before and after the change in illuminance distribution. According to the vehicle headlamp control system, the light distributing direction can be changed without shifting the illuminated area within the illumination range.

In the vehicle headlamp control system according to the invention, wherein each of the partial areas is illuminated with light from at least one of the plurality of light sources, and wherein the control means having the second control function configured to shifts a partial area having a predetermined illuminance from a first position to a second position within the illuminated area and maintains the illuminance of other partial areas than those in the first and second positions to thereby change the illuminance distribution. By adopting this configuration to the vehicle headlamp control system, the light distributing direction can be changed while suppressing the number of light emitting elements that are associated with the change in current amount to the lowest level.

In the vehicle headlamp control system according to the invention, wherein the plurality of light sources is a light source for high beam.

According to the vehicle headlamp control system of the invention, the swivel mechanism for swiveling mechanically an optical axis of a lamp can be omitted to thereby realize a reduction in size and weight of the lamp unit. Additionally, the front visibility of the driver can be ensured by suppressing the reduction in illuminance in the illuminated area that would otherwise occur in association with the electronic swivel control to the lowest level. Also, according to the vehicle headlamp control system of the invention, the light distributing state that is more preferable for the driver can be realized according to the driving speed of the vehicle while avoiding the increase in control load as much as possible. In addition, the optical mechanism for controlling the illumination range or the swivel mechanism for mechanically swiveling the optical axis of the lamp can be omitted, thereby making it possible to realize a reduction in size and weight of the lamp unit.

### Brief Description of the Drawings

Examples of the present invention will now be described in detail with reference to the accompanying drawings, in which:
Fig. 1 is an exemplary diagram showing an overall configuration of a vehicle in which a vehicle headlamp control system according to a first embodiment of the invention is installed.
Fig. 2 is a horizontal sectional view showing the configuration of a right headlamp unit in Fig. 1.
Fig. 3 is an exemplary diagram showing the configuration of a light emitting element unit in Fig. 2.
Fig. 4A and 4B are exemplary diagrams showing a light distribution pattern that is formed by light from a vehicle headlamp in Fig. 1.
Fig. 5A and 5B are exemplary diagrams for illustrating a dimming control by the vehicle headlamp shown in Fig. 1.
Fig. 6A and 6B are exemplary diagrams for illustrating a dimming control by a vehicle headlamp control system according to a second embodiment of the invention.
Fig. 7A is an exemplary diagram showing the configuration of a light emitting element unit of a vehicle headlamp provided in a vehicle headlamp control system according to a third embodiment of the invention
Fig. 7B is an exemplary diagram showing an additional light distribution pattern that is formed by light from the vehicle headlamp.
Fig. 8 is an exemplary diagram showing the configuration of a light emitting element unit of a vehicle headlamp provided in a vehicle headlamp control system according to a fourth embodiment of the invention.
Fig. 9A and 9B are exemplary diagrams showing a light distribution pattern that is formed by light from the vehicle headlamp provided in the vehicle headlamp control system according to the fourth embodiment of the invention.
Fig. 10A and 10B are exemplary diagrams for illustrating an illumination range control by the vehicle headlamp control system according to the fourth embodiment of the invention.
Fig. 11A and 11B are exemplary diagrams for illustrating an electronic swivel control by the vehicle headlamp control system according to the fourth embodiment of the invention.
Fig. 12A to 12D are exemplary diagrams for illustrating a dimming control by a vehicle headlamp control system.
Fig. 13A and 13B are exemplary diagrams for illustrating a dimming control by a vehicle headlamp control system.

### Detailed Description

Hereinbelow, referring to the accompanying drawings, the invention will be described in detail. In the drawings used in the following description, scales on which constituent members are shown are changed as required in order to show them in a recognizable fashion.

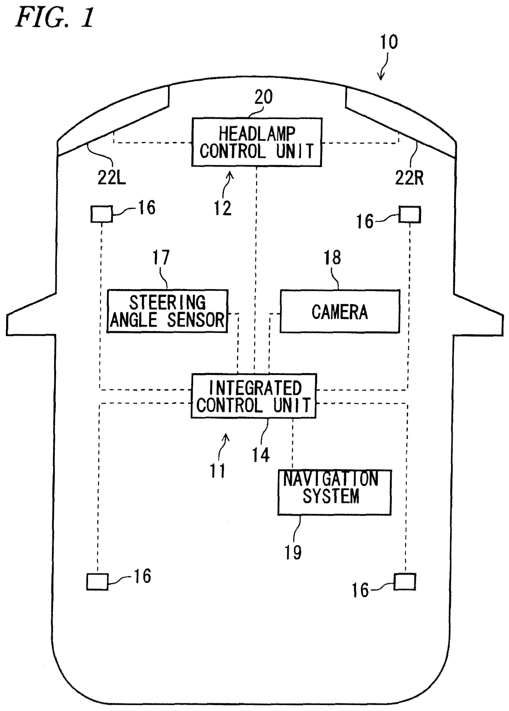

Fig. 1 shows exemplarily an overall configuration of a vehicle 10 in which a vehicle headlamp control system 11 according to a first embodiment of the invention is installed. The vehicle headlamp control system 11 includes a vehicle headlamp 12, an integrated control unit 14, wheel speed sensors 16, a steering angle sensor 17, a camera 18 and a navigation system 19.

The integrated control unit 14 includes a CPU that executes various operation processes, a ROM that stores various control programs and a RAM that is used as a working area for data storage and program execution and executes various controls in the vehicle 10. The integrated control unit 14 functions as at least part of a control unit of the invention.

The wheel speed sensors 16 are provided so as to correspond individually to four wheels that are assembled to the vehicle 10: left and right front wheels and left and right rear wheels. The wheel speed sensors 16 are each connected to the integrated control unit 14 for communication and output signals corresponding to rotational speeds of the wheels to the integrated control unit 14. The integrated control unit 14 calculates a speed of the vehicle by using the signals that are inputted thereinto from the wheel speed sensors 16.

The steering angle sensor 17 is provided in a steering wheel and is connected to the integrated control unit 14 for communication. The steering angle sensor 17 outputs a steering angle pulse signal that corresponds to a turning angle of the steering wheel that is turned by the driver for steering to the integrated control unit 14. The integrated control unit 14 calculates a traveling direction of the vehicle by using the signal inputted thereinto from the steering angle sensor 17.

The camera 18 includes an image capturing or picture element such as a CCD (Charged Coupled Devices) sensor or a CMOS (Complementary Metal Oxide Semiconductor) sensor, for example, and captures an image of a foreground in front of the vehicle to generate image data. The camera 18 is connected to the integrated control unit 14 for communication and outputs the image data so generated to the integrated control unit 14.

The navigation system 19 is connected to the integrated control unit 14 for communication and outputs information indicative of a place where the vehicle 10 is being driven to the integrated control unit 14.

The vehicle headlamp 12 includes a headlamp control unit 20, a right headlamp unit 22R and a left headlamp unit 22L. Hereinafter, the right headlamp unit 22R and the left headlamp unit 22L are simply referred to as headlamp units 22 as required. The headlamp control unit 20 has a CPU, a ROM and a RAM and controls the emission of light by the headlamp unit 22. The headlamp control unit 20 functions as at least part of the control unit of the invention.

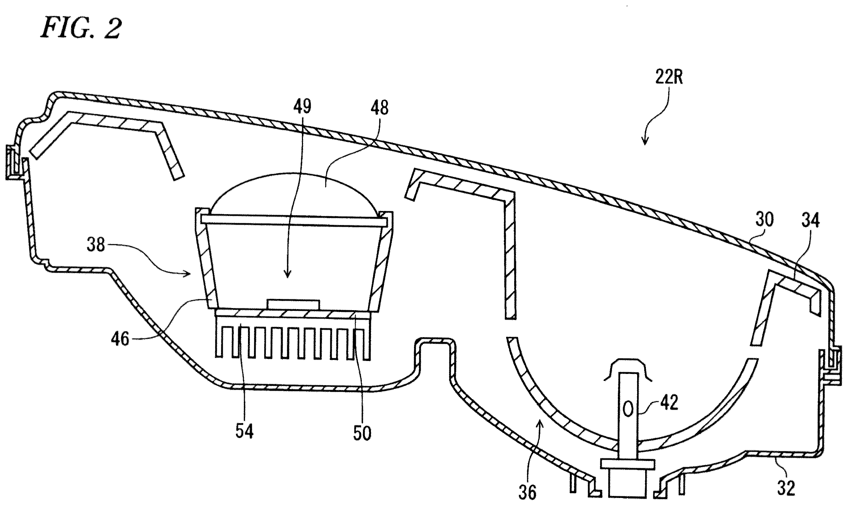

Fig. 2 shows a horizontal sectional view of the right headlamp unit 22R as viewed from thereabove. The right headlamp unit 22R includes a light transmissive cover 30, a lamp body 32, an extension 34, a first lamp unit 36, and a second lamp unit 38.

The light transmissive cover 30 is formed of resin having light transmission properties. The light transmissive cover 30 is attached to the lamp body 32 to define a lamp compartment. The first lamp unit 36 and the second lamp unit 38 are disposed inside the lamp compartment.

The extension 34 has opening portions through which illumination light shone from the first lamp unit 36 and the second lamp unit 38 is passed and is fixed to the lamp body 32. The first lamp unit 36 is disposed further transversely outwards than the second lamp unit 38.

The first lamp unit 36 is a so-called parabolic lamp unit and forms a low beam light distribution pattern, which will be described later. The first lamp unit 36 employs as a light source 42 an incandescent lamp having a filament such as a halogen lamp or an HID (High Intensity Discharge) lamp such as a metal halide lamp. Since the configuration of the first lamp unit 36 is known, the detailed description thereof will be omitted here.

The second lamp unit 38 includes a holder 46, a projection lens 48, a light emitting element unit 49, a circuit board 50 and a heat sink 54.

The projection lens 48 is mounted in one of opening portions of the holder 46 which is formed into a cylindrical shape. The projection lens 48 is a planoconvex aspheric lens for which a front surface is convex and a rear surface is plane. The projection lens 48 projects a light source image that is formed on a rear focal plane on to an imaginary vertical screen ahead of the lamp as an inverted image.

The light emitting element unit 49 is provided on a front surface of the circuit board 50, and the heat sink 54 is provided on a rear surface of the circuit board 50. The heat sink 54 is formed of aluminum and into a shape having a number of heat dissipating fins.

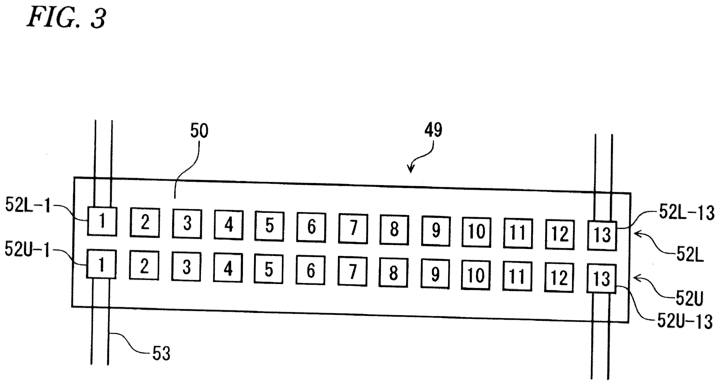

Fig. 3 shows a configuration of the light emitting element unit 49 as seen from the front of the vehicle. The light emitting element unit 49 includes a lower light emitting element array 52L and an upper light emitting element array 52U which are mounted on the circuit board 50.

The lower light emitting element array 52L includes a first lower light emitting element 52L-1 to a thirteenth lower light emitting element 52L-13 which are arranged sideways in that order from a right-hand side to a left-hand side of the vehicle. The upper light emitting element array 52U includes a first upper light emitting element 52U-1 to a thirteenth upper light emitting element 52U-13 which are arranged sideways in that order from the right-hand side to the left-hand side of the vehicle.

The light emitting elements are each formed into a rectangular parallelepipedal shape having the same height and the same width. Although the illustration thereof is omitted, each light emitting element has a light source and a film. The light source is a white LED (light emitting diode) having a light emitting surface measuring 1 mm square, and the film is provided so as to cover this light emitting surface.

In Fig. 3, numbers are given to the individual light emitting elements, and reference numerals are not given to the light emitting elements other than the first lower light emitting element 52L-1, the thirteenth lower light emitting element 52L-13, the first upper light emitting element 52U-1 and the thirteenth upper light emitting element 52U-13. For example, in the lower light emitting elements 52L, the light emitting element that is denoted by 7 means a seventh lower light emitting element 52L-7, whereas in the upper light emitting elements 52U, the light emitting element denoted by 12 means a twelfth upper light emitting element 52U-12.

The respective light emitting elements define current circuits via control lines 53 between the headlamp control unit 20 and themselves. In Fig. 3, the illustration of control lines 53 is omitted for the light emitting elements other than the first lower light emitting element 52L-1, the thirteenth lower light emitting element 52L-13, the first upper light emitting element 52U-1 and the thirteenth upper light emitting element 52U-13. The headlamp control unit 20 can control the luminous intensities of the respective light emitting elements when they are turned on or off and turned on by regulating the amount of current that is supplied through the control lines 53.

As shown in Fig. 2, by the circuit board 50 being mounted in the other opening portion of the holder 46, the light emitting element unit 49 is disposed in an interior of the holder 46. When the plurality of light emitting elements provided in the light emitting element unit 49 are individually illuminated, their images are projected on to the imaginary vertical screen ahead of the lamp. The plurality of light emitting elements function as a plurality of light sources in the invention.

The left headlamp unit 22L has a transversely symmetrical configuration with the right headlamp unit 22R, and hence, the detailed description thereof will be omitted. Note that also in the left headlamp unit 22L, a first lower light emitting element 52L-1 to a thirteenth lower light emitting element 52L-13 and a first upper light emitting element 52U-1 to a thirteenth upper light emitting element 52U-13 are arranged sideways in that order from the right-hand side to the left-hand side of the vehicle. Namely, as to internal configurations of the second lamp units 38, the left headlamp unit 22L and the right headlamp unit 22R are not transversely symmetrical with each other.

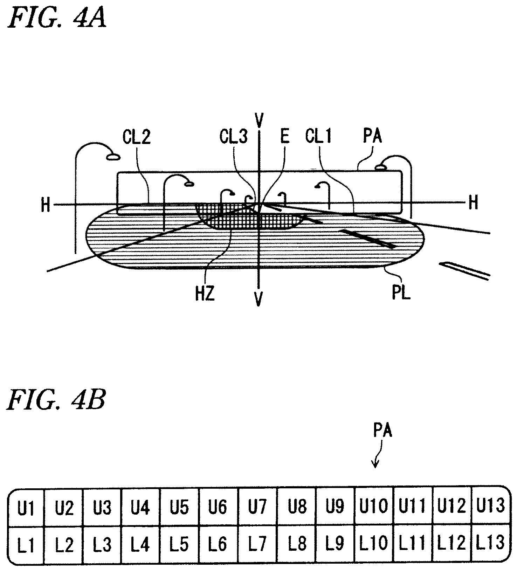

Shown in Fig. 4A is a light distribution pattern that is formed on an imaginary vertical screen that is placed in a position 25 m ahead of the vehicle, for example, by light shone to the front from the right headlamp unit 22R and the left headlamp unit 22L.

A low beam light distribution pattern PL is formed by combining illumination light shone from the first lamp unit 36 of the right headlamp unit 22R and illumination light shone from the first lamp unit 36 of the left headlamp unit 22L. The low beam light distribution pattern PL is a low beam light distribution pattern for the left-hand side traffic and has a first cut-off line CL1 to a third cut-off line CL3 along an upper edge thereof. The first cut-off line CL1 to the third cut-off line CL3 extend in a horizontal direction to be staggered across a V-V line, as a boundary, that is a vertical line passing through a vanishing point in the direction of the front of the lamp.

The first cut-off line CL1 is used as an oncoming lane cut-off line. The third cut-off line CL3 extends obliquely upwards towards the left from a left end portion of the first cut-off line CL1. The second cut-off line CL2 extends over an H-H line on a left-hand side of a point of intersection between the third cut-off line CL3 and the H-H line. Namely, the second cut-off line CL2 is used as a cut-off line for a lane for the subject vehicle.

In the low beam light distribution pattern PL, a hot zone HZ, which is a high luminous intensity area, is formed so as to surround an elbow point E, which is a point of intersection between the first cut-off line CL1 and the V-V line, the elbow point E being positioned to lie slightly leftwards.

An additional light distribution pattern PA corresponds to an illumination range of the invention and is defined as a light distribution pattern that is formed by illumination light shone from all the light emitting elements provided in the second lamp units 38 of the right headlamp unit 22R and the left headlamp unit 22L. The additional light distribution pattern PA includes the horizontal line (the H-H line) and is formed into a belt-like shape which extends in the horizontal direction so that a lower edge is positioned on the first cut-off line CL1. Thus, the second lamp units 38 may be such as to function as a high beam light source.

A relation between the additional light distribution pattern PA and the lower light emitting element array 52L and the upper light emitting element array 52U is shown in Fig. 4B. In this example, the additional light distribution pattern PA is divided into 26 partial areas which each have substantially the same shape and surface area and includes upper partial areas U1 to U13 and lower partial areas L1 to L13. The lower partial areas L1 to L13 are positioned near the H-H line, and the upper partial areas U1 to U13 are positioned above the lower partial areas L1 to L13.

The lower partial area L1 is formed as a combination of projected images of light source images of the first lower light emitting element 52L-1 of the right headlamp unit 22R and the first lower light emitting element 52L-1 of the left headlamp unit 22L. In other words, the lower partial area L1 is formed by combing illumination light shone from these light emitting elements. This is true with the other partial areas, and they are each formed by combining illumination light shone from the corresponding light emitting elements of the left and right headlamp units 22.

For example, the lower partial area L9 is formed by combining illumination light shone from the left and right ninth lower light emitting elements 52L-9. Additionally, the upper partial area U11 is formed by combining illumination light shone from the left and right eleventh upper light emitting elements 52U-11. Since illumination light shone from the respective light emitting elements passes through the projection lens 48, the arrangement of the partial areas and the arrangement of the light emitting elements shown in Fig. 3 are reversed vertically and horizontally.

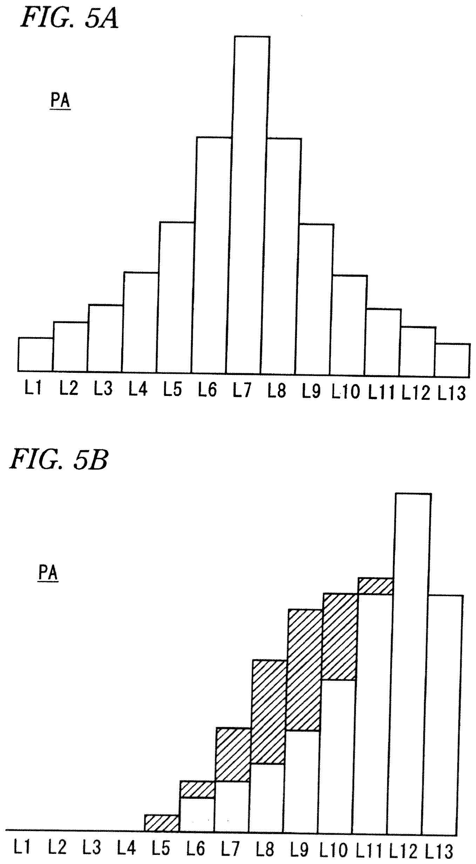

Next, referring to Fig. 5A and 5B, a dimming control will be described that is performed by the vehicle headlamp control system 11 that is configured as described heretofore.

The vehicle headlamp control system 11 according to this embodiment enables an electronic swivel control in which an illuminated area formed by the vehicle headlamp 12 is shifted sideways within the additional light distribution pattern PA so as to follow a change in steering angle of the vehicle 10 to thereby illuminate a foreground of the vehicle 10 so steered.

The integrated control unit 14 changes the luminous intensity of illumination light by increasing or decreasing the amounts of currents flowing to the respective light emitting elements of the left and right headlamp units 22 through the headlamp control unit 20 based on signals inputted thereinto from the wheel speed sensors 16 and the steering sensor 17. Thus, the illuminance of the respective partial areas is adjusted, whereby the illuminance distribution within the additional light distribution pattern PA is changed. By performing this adjustment as required, the illuminated area that is a collection of the partial areas that are illuminated shifts sideways in the horizontal direction within the additional light distribution pattern PA, thereby making it possible to obtain an effect equal to that provided by a swivel mechanism for mechanically swiveling the optical axes of the lamps of the respective headlamp units 22.

Shown in Fig. 5A is an illuminance distribution of the lower partial areas L1 to L13 within the additional light distribution pattern PA in a certain initial illuminated state. Longer bar graphs denote higher illuminance. Additionally, the illuminance of the respective partial areas is related equivalently to the amounts of currents that are supplied to the light emitting elements that shine light to the relevant partial areas. Therefore, the diagram in Fig. 5A also represents values of currents that are supplied to the light emitting elements which correspond to the respective partial areas, the longer bar graphs denoting larger current values.

Namely, in the initial illuminated state described above, the illuminated area is formed so that the area near the elbow point E is illuminated most brightly and the illuminance is lowered as the partial areas spread horizontally sideways away from the elbow point E.

Shown in Fig. 5B is a diagram showing an illuminance distribution occurring in the same partial areas as a result of performing an electronic swivel control so that the illuminated area is shifted rightwards within the additional light distribution pattern PA when the vehicle 10 is turned from the initial illuminated state described above. The partial area having the highest illuminance within the illuminated area is shifted in a swiveling fashion from L7 to L12 in response to the turning of the vehicle 10 so as to shine light to give the highest illuminance to a predetermined location ahead of the vehicle 10 so steered.

Being different from the swivel mechanism for mechanically swiveling the optical axis of the lamp of the lamp unit, in the electronic swivel control, the additional light distribution pattern PA itself is not shifted sideways. Consequently, when the illuminated area is shifted to the right from the state shown in Fig. 5A with the illuminance distribution within the illuminated area maintained, in other words, with the difference in illuminance between the adjacent partial areas which are still accommodated in the illuminated area maintained, as shown by white portions of the bar graphs in Fig. 5B, part of the illuminated area (portions corresponding to the initial lower partial areas L9 to L13) protrudes out of the additional light distribution pattern PA from a right end thereof.

As a result, the portions of the illuminated area which are included in the initial lower partial areas L9 to L13 cannot be illuminated by light shone from the light emitting elements, and therefore, the illuminance of the illuminated area is lowered as a whole. This causes the driver to feel that the illuminance of the location ahead of the steered vehicle 10 is lowered after the execution of the electronic swivel control.

Then, in the vehicle headlamp control system 11 according to this embodiment, in view of the characteristics of the light emitting element array that the respective light intensities of the light emitting elements can be controlled independently, a control is made so that the illuminance of the whole illuminated area is maintained by supplementing lack of illuminance resulting from the reduction caused by the swiveling shift of the illuminated area by raising the illuminance of the other partial areas.

A total surface area of shaded portions shown in Fig. 5B coincides with a total surface area of the lower partial areas L9 to L13 shown in Fig. 5A. The part of the illuminated area that corresponds to those partial areas cannot be illuminated after the shifting of the illuminated area by executing the electronic swivel control, and therefore, the illuminance of the whole illuminated area is reduced accordingly.

In the dimming control performed by the vehicle headlamp control system 11 according to this embodiment, the reduced illuminance is distributed appropriately so as to be allocated to the lower partial areas L5 to L11 so that the illuminance of the respective lower partial areas L5 to L11 is raised by the shaded portions. As a result, the illuminance distribution within the illuminated area after the swivel shift thereof becomes a sum of the white portions and the shaded portions. When looking at the whole illuminated area, the illuminance resulting before the swiveling shift of the illuminated area is maintained, and therefore, it is possible to restrict the driver from feeling that the location ahead of the steered vehicle 10 gets dark.

When the execution of the electronic swiveling control is instructed by the integrated control unit 14, a difference in illuminance of the whole illuminated area between before and after the electronic swiveling control is obtained when the illuminated area is swivel shifted by an amount corresponding to a desired swivel angle within the additional light distribution pattern PA with the illuminance distribution of the current illuminated area maintained. Specifically, the headlamp control unit 20 calculates a difference between a total amount of current that drives the light emitting elements which shine illumination light on to the partial areas included in the current illuminated area and a total amount of current that drives the light emitting elements that are necessary to form an imaginary illuminated area after the swivel shift of the illuminated area.

When the difference so calculated is zero or there is no difference calculated, this means that the whole of the imaginary illuminated area after the swivel shift continues to be accommodated within the additional light distribution pattern PA. In this case, since no particular additional processing is required, the turning on or off and luminous intensities of the first lower light emitting element 52L-1 to the thirteenth lower light emitting element 52L-13 are controlled so that the current illuminated area is swivel shifted by a predetermined amount within the additional light distribution pattern PA.

When there is a certain difference calculated, this means that as shown in Fig. 5B, part of the imaginary illuminated area after the swivel shift of the illuminated area protrudes out of the additional light distribution pattern PA. In the case of this example, the amount of current that drives the light emitting elements that shine illumination light on to the lower partial areas L9 to L13 of the current illuminated area shown in Fig. 5A is calculated as the difference.

The headlamp control unit 20 determines a real illuminance distribution of the illuminated area after the swivel shift based on the current amount that is calculated as the difference. Specifically, the respective driving currents of the light emitting elements that correspond to the other partial areas which are located within the additional light distribution pattern PA are increased individually by amounts to which the calculated differential current amount is distributed appropriately, and the resulting driving currents are determined as driving currents of the light emitting elements that make up the illuminated area after the swivel shift.

In the example shown in Fig. 5B, the shaded portions of the bar graphs correspond to the amounts of the driving currents that are increased by the process described above. The amount of current that drives the light emitting elements that shine illumination light on to the lower partial areas L9 to L13 of the current illuminated area shown in Fig. 5A is distributed to be added as the driving currents of the light emitting elements that shine illumination light on to the lower partial areas L5 to L11.

The headlamp control unit 20 controls the turning on or off and luminous intensities of the first lower light emitting element 52L-1 to the thirteenth lower light emitting element 52L-13 which correspond individually to the lower partial areas L1 to L13 so that the illuminated area after the swivel shift becomes the illuminated area that is determined in the way described above.

Namely, in the vehicle headlamp control system 11 according to this embodiment, in executing the control to swivel shift the predetermined illuminated area within the additional light distribution pattern PA, the difference in illuminance between the adjacent partial areas that are still accommodated in the additional light distribution pattern PA is changed between before and after the swivel shift to thereby change the illuminance distribution. At least one set of such adjacent areas should be included in the illuminated area after the swivel shift.

In other words, a control is made so that the illuminance of the predetermined partial areas in the illuminated area after the swivel shift becomes higher than the illuminance of the partial areas of the illuminated area before the swivel shift that correspond to the predetermined partial areas.

For example, the lower partial area L5 of the illuminated area resulting before the swivel shift shown in Fig. 5A corresponds to the lower partial area L10 of the illuminated area after the swivel shift shown in Fig. 5B. The illuminance of the lower partial area L10 after the swivel shift is higher than the illuminance of the lower partial area L5 before the swivel shift. At least such a partial area should be included in the illuminated area after the swivel shift.

As long as the aforesaid control guideline is followed, how to distribute the differential current amount can be determined as required. In the example described above, the control is made so that the illuminance of the whole illuminated area before the swivel shift substantially coincides with the illuminance of the whole illuminated area after the swivel shift by additionally distributing the whole of the differential current amount to the light emitting elements that correspond to the other partial areas. However, at least part of the differential current amount may be used for such additional distribution. Additionally, in the event that the change in light distribution is temporary, a current amount that exceeds the differential current amount may be supplied for additional distribution.

The differential current amount may be distributed uniformly to the light emitting elements that shine illumination light on to the partial areas that make up the illuminated area after the swivel shift. Additionally, as shown in Fig. 5B, the different current amounts may be added to the light emitting elements.

When different current amounts are additionally distributed to the light emitting elements, a control may be made so that the increase in illuminance becomes more conspicuous in the areas lying nearer a position where the integrated control unit 14 estimates that the line of sight of the driver exists.

In Fig. 5B, it is estimated that the line of sight of the driver is located near the lower partial area L9. Because of this, the control is made so that the increase in driving current becomes conspicuous towards the lower partial area L9. In this case, since the illuminance distribution of the illuminated area after the swivel shift is determined so that the partial areas lying near the position where the line of sight of the driver is estimated to exist is illuminated more brightly.

As in the case with the lower partial area L5 in Fig. 5B, part of the differential current amount may be distributed to the partial area (originally regarded a non-illuminated partial area) that corresponds to the partial area that is not included in the illuminated area before the swivel shift. Additionally, the distribution of the differential current amount may be determined so that the illuminance is increased only in the partial areas (only the lower partial areas L6 to L13 in Fig. 5B) that correspond to the partial areas that are not included in the illuminated area before the swivel shift.

In the example described above, the headlamp control unit 20 calculates arithmetically the difference in the total amount of current that drives the light emitting elements between before and after the swivel shift of the illuminated area and then determines on the illuminance distribution (the additional distribution of the driving current) in the illuminated area after the swivel shift based on the difference so calculated. However, a configuration may be adopted in which a plurality of illumination patterns having different illuminance distributions in the illuminated area after the swivel shift are stored according to predicted driving conditions of the vehicle 10 so that any one of the illumination patterns is selected according to a driving condition of the vehicle that the integrated control unit 14 detects. As this occurs, the processing load of the headlamp control unit 20 can be suppressed.

The upper light emitting elements 52U-1 to 52U-13 that shine illumination light individually on to the upper partial areas U1 to U13 can be controlled in the same manner as the lower light emitting elements 52L-1 to 52L-13 are done as described above. Therefore, the detailed description of the control of the upper light emitting elements 52U-1 to 52U-13 will be omitted here. The driving of the upper light emitting element array 52U and the lower light emitting element array 52L may be control in an interrelated fashion or independently.

Additionally, a configuration may be adopted in which the integrated control unit 14 completes the processes including the process to determine the illuminance distribution of the illuminated area after the swivel shift and outputs a command indicative of turning on or off and luminous intensities of the light emitting elements that correspond to the result of the determination. As this occurs, the headlamp control unit 20 controls the supply and cutting off the supply of currents that flow to the light emitting elements based on the command.

In addition, the electronic swivel control can also be applied to a case where a pedestrian who is detected to exist within the additional light distribution pattern PA is spot illuminated. For example, the integrated control unit 14 determines whether or not a pedestrian exists ahead of the vehicle by analyzing image data inputted thereinto from the camera 18. When having determined that such a pedestrian exists, the integrated control unit 14 outputs position data indicative of the position of the pedestrian that is obtained as a result of analyzing the image data to the headlamp control unit 20.

In addition to or in place of the image data that is inputted from the camera 18, the existence of a pedestrian may be identified by making use of obstacle data that is acquired by a front sensor such as a laser sensor, not shown.

The headlamp control unit 20 identifies the partial area or areas within the additional light distribution pattern PA that include the position of the pedestrian and turns on the light emitting element or elements that correspond to the partial area or areas. As a result of the pedestrian being spot illuminated, the pedestrian is let known of the existence of the vehicle effectively and the driver can recognize the pedestrian in an ensured fashion.

When the relative position with the pedestrian changes as the vehicle 10 turns, in order to keep the pedestrian illuminated, the illuminated area needs to be swivel shifted within the additional light distribution pattern PA. In these conditions, there can be caused a situation where at least part of the illuminated area protrudes out of the additional light distribution pattern PA.

For example, when part of the illuminated area after the swivel shift protrudes out of the additional light distribution pattern PA from a left end thereof, the illuminance of the illuminated area is lowered by such an extent as to correspond to the protruding portion. Then, the reduction in illuminance can be supplemented to some extent by adding driving currents that correspond to the reduced illuminance to the light emitting elements that shine illumination light on to the partial areas L1 and U1 which are located at a left end portion of the additional light distribution pattern PA, for example.

Note that the electronic swivel control is validated or invalidated by the driver. Alternatively, the integrated control unit 14 may determine whether or not the electronic control should be involved based on information on the position of the vehicle that is acquired by the navigation system 19 for execution of an automatic switching between validation and invalidation of the electronic swivel control.

Thus, as has been described heretofore, in the vehicle headlamp control system 11 according to the embodiment, since the vehicle headlamp 12 executes the dimming control through the electronic swivel control, the necessity is obviated of providing the swivel mechanism for mechanically swiveling the optical axis of the lamp in the headlamp unit 22. Therefore, compared with the vehicle headlamp in which the lamp unit has the swivel mechanism, the whole of the lamp unit can be made small in size and light in weight. Further, in the vehicle headlamp control system 11 according to this embodiment, the vehicle headlamp 12 can not only suppress the reduction in illuminance of the illuminated area that occurs in association with the electronic swivel control to a minimum level but also ensure the forward visibility of the driver.

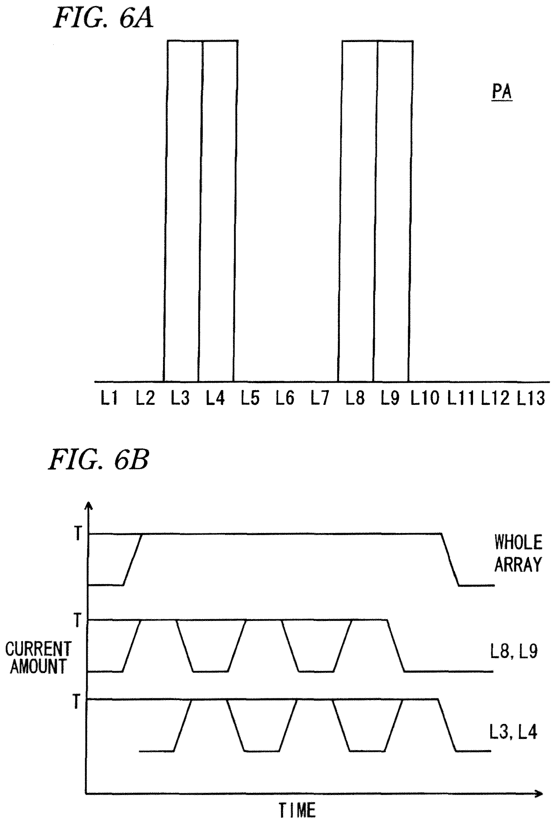

Next, referring to Fig. 6A and 6B, a vehicle headlamp control system 11 according to a second embodiment of the invention will be described. The vehicle headlamp control system 11 according to this embodiment differs from the vehicle headlamp control system 11 according to the first embodiment in that a dimming control that is executed by an integrated control unit 14 and a headlamp control unit 20 differs from the dimming control that is executed in the first embodiment. The other configurations of the vehicle headlamp control system 11 are the same as those of the vehicle headlamp control system 11 of the first embodiment, and therefore, the detailed description thereof will be omitted here.

The dimming control executed in the vehicle headlamp control system 11 of this embodiment relates to the spot illumination of the pedestrian described in the first embodiment. When a pedestrian is detected within an additional light distribution pattern PA by a camera 18, light is shone locally on to a partial area where the pedestrian is located. This spot illumination is executed using light of which the illuminance is relatively high, and therefore, a current supplied becomes large. Because of this, when a plurality of pedestrians are detected and they need to be spot illuminated individually, there are fears that a current to be supplied to a light emitting element array exceeds a rated current value that is allowed to be supplied to the light emitting element array.

According to the dimming control executed by the vehicle headlamp control system 11 according to this embodiment, the current supplied to the light emitting element array is prevented from exceeding the rated current value while allowing the plurality of pedestrians to be spot illuminated.

Shown in Fig. 6A is a diagram showing an illuminance distribution in lower partial areas L1 to L13 when two pedestrians detected within the additional light distribution pattern PA are spot illuminated. The first pedestrian is receiving a spot illumination in a position which corresponds to the lower partial areas L3 and L4, and the second pedestrian is receiving a spot illumination in a position which corresponds to the lower partial areas L8 and L9.

Shown in Fig. 6B is a diagram showing a relation between current amounts that are supplied to light emitting elements that execute the spot illuminations and a current amount that is supplied to the whole of the light emitting element array. A lower graph represents a total of current amounts supplied to light emitting elements that shine illumination light on to the lower partial areas L3 and L4, a middle graph represents a total of current amounts supplied to light emitting elements that shine illumination light on to the lower partial areas L8 and L9, and an upper graph represents a total of current amounts supplied to the whole lower light emitting element array 52L. T denotes a rated current value that is allowed to be supplied to the lower light emitting element array 52L.

In the dimming control of this embodiment, when there are a plurality of areas that need a spot illumination, the light emitting elements that shine light on to these areas are turned on and off in an alternate fashion. In the example shown in Fig. 6B, when the light emitting elements that shine light on to the lower partial areas L3 and L4 are turned on, the light emitting elements that shine light on to the lower partial areas L8 and L9 are turned off, whereas when the light emitting elements that shine light on to the lower partial areas L3 and L4 are turned off, the light emitting elements that shine light on to the lower partial areas L8 and L9 are turned on.

By executing the turning on and off control of the light emitting elements in the way described above, while the current supplied to the light emitting elements that shine light on to the spot illuminated areas are limited to the rated current value T of the lower light emitting element array 52L, the current amount supplied to the lower light emitting element array 52L never exceeds the rated value T throughout the execution of the spot illumination operation.

When a switching frequency between the plurality of spot illuminated areas, that is, a turning on/off frequency of the light emitting elements corresponding to the respective spot illuminated areas becomes high, the driver visually recognizes this as a reduction in illuminance in the respective spot illuminated areas. Then, in this embodiment, the turning on/off frequency is set to be less than 30 Hz and 4 Hz or more. By setting it in this way, the pedestrians located in the respective spot illuminated areas can be recognized by the driver with sufficient brightness.

When the number of pedestrians to be spot illuminated is increased, the cycle at which the respective pedestrians are illuminated repeatedly has to be lengthened. In this case, a configuration may be adopted in which an upper limit is imposed on the number of areas that are subjected to spot illumination so that a spot illumination is preferentially started with a pedestrian in higher danger.

Specifically, a pedestrian detected in the lane for the subject vehicle is given highest priority over other pedestrians and the priority is set to be lowered for a pedestrian who is entering the subject vehicle's lane from the curbside area and then a pedestrian who is detected in the curbside area in that order. The positions of these pedestrians are determined by the integrated control unit 14 which analyzes image data inputted thereinto through the camera 18.

Thus, as has been described heretofore, according to the dimming control by the vehicle headlamp control system 11 according to this embodiment, even when the plurality of areas needing the spot illumination are detected within the additional light distribution pattern PA, the control can be made so that the current supplied to the light emitting element array does not exceed the rated current value set therefor while making the illuminance of the respective spot illuminated areas the largest.

Objects to be spot illuminated are not limited to pedestrians. An obstacle such as a vehicle parked in the curbside area can be included in objects to be spot illuminated as required.

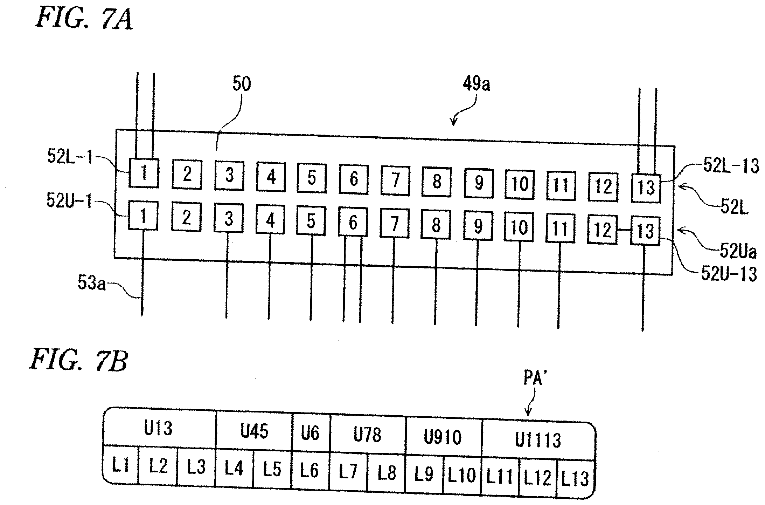

Next, referring to Fig. 7A and 7B, a vehicle headlamp control system 11 according to a third embodiment of the invention will be described. The configuration of a light emitting element unit 49a that is included in a second lamp unit 38 of the vehicle headlamp control system 11 of this embodiment differs from that of the light emitting element unit 49 in the vehicle headlamp control system 11 according to the first embodiment. The other configurations of the vehicle headlamp control system 11 of this embodiment are the same as those of the vehicle headlamp control system 11 according to the first embodiment, and therefore, the detailed description thereof will be omitted here.

In the additional light distribution pattern PA shown in Fig. 4B, the necessity of executing a fine light distribution control is less in the upper partial areas U1 to U13 than in the lower partial areas L1 to L13 which includes the area lying near the H-H line. In other words, the upper portion of the additional light distribution pattern PA can be made up of a smaller number of partial areas. However, in the event that the number of light emitting areas is decreased so as to match the reduced number of partial areas, this results in a reduction in illuminance of the respective partial areas or lack of light distribution surface area.

Then, the light emitting element unit 49a that is provided in a vehicle headlamp 12 of the vehicle headlamp control system 11 according to this embodiment is configured so that the number of partial areas where light distribution can be controlled is decreased while ensuring the illuminance without decreasing the number of light emitting elements.

Fig. 7A is the configuration of the light emitting element unit 49a as seen from the front of the vehicle. The light emitting element unit 49a includes a lower light emitting element array 52L and an upper light emitting element array 52Ua which are mounted on a circuit board 50. The configuration of the lower light emitting element array 52L is the same as that of the lower light emitting element array 52L of the first embodiment, and therefore, the detailed description thereof will be omitted here.

Fig. 7B is an exemplary diagram showing an additional light distribution pattern PA' that is formed by the light emitting element unit 49a provided in the vehicle headlamp 12 of the vehicle headlamp control system 11 according to this embodiment. A lower portion of the pattern is divided into 13 partial areas of partial areas L1 to L13, while an upper portion of the pattern is divided into six partial areas of partial areas U13, U45, U6, U78, U910 and U1113.

Some of the plurality of light emitting elements which make up the upper light emitting element array 52Ua are connected in series by control lines 53a so as to shine illumination light individually to the upper partial areas that are divided as described above.

In the example shown in Fig. 7B, the upper partial area U13 has a surface area corresponding to the lower partial areas L1 to L3. The three upper light emitting elements 52U-1 to 52U-3 are connected in series by the control line 53a so as to be turned on simultaneously to thereby shine illumination light on to this upper partial area U13. Thus, since the upper partial area U13 having the surface area corresponding to the lower partial areas L1 to L3 is illuminated by the same number of upper light emitting elements as the number of lower light emitting elements that shine illumination light on to the lower partial areas L1 to L3, there is no such situation that the luminance of the upper partial area U13 is lowered.

Similarly, the upper partial area U45 having a surface area corresponding to the lower partial areas L4, L5 is illuminated by the two upper light emitting elements 52U-4 and 52U-5 which are connected in series. As to the upper partial area U6, as with the first embodiment, the upper light emitting element 52U-6 is controlled alone to be turned on or off. As to the upper partial areas U910 and U1113, illuminating configurations are similar to those of the upper partial areas U45 and U13, and therefore, the detailed description thereof will be omitted here.

According to this configuration, the number of power supplies to light emitting elements can be decreased to suppress the production costs while the respective partial areas are illuminated with the sufficient illuminance and light distribution surface areas. Additionally, since the number of target light emitting elements that are controlled to be turned on or off is decreased, the processing load of the headlamp control unit 20 can also be decreased.

The number and surface areas of the upper partial areas can be determined as required according to the specification of the light distribution control. In the example shown in Fig. 7B, although the way in the partial areas are divided is asymmetrical transversely, the partial areas may be divided transversely symmetrically.

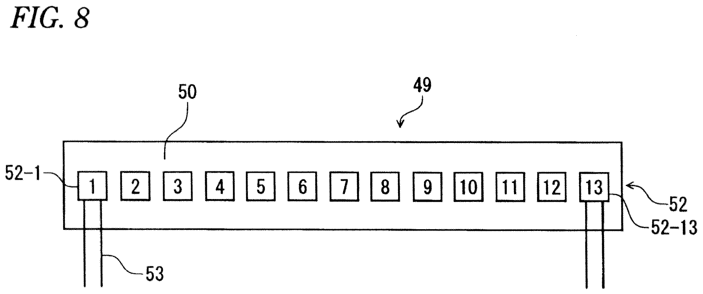

Next, referring to Fig. 8, a vehicle headlamp control system 11 according to a fourth embodiment of the invention will be described. In the vehicle headlamp control system 11 according to this embodiment, the configuration of a light emitting element unit 49 differs from those of the vehicle headlamp control systems 11 according to the first to third embodiments that have been described before. Fig. 8 is an exemplary diagram showing the configuration of the light emitting element unit 49, as viewed from the front of the vehicle, which is provided in a headlamp 12 of the vehicle headlamp control system 11 according to this embodiment. The other configurations are the same as those of the first to third embodiments, and therefore, like reference numerals are given to configurations similar to those embodiments, the detailed description thereof being thereby omitted.

The light emitting element unit 49 includes a light emitting element array 52 that is mounted on a circuit board 50. The light emitting element array 52 includes a first light emitting element 52-1 to a thirteenth light emitting element 52-13 which are arranged sideways in that order from a right-hand side to a left-hand side of the vehicle. The light emitting elements are each formed into a rectangular parallelepiped shape having the same height and the same width. Although the illustration thereof is omitted, each light emitting element has a light source and a film. The light source is a white LED (light emitting diode) having a light emitting surface measuring 1 mm square, and the film is provided so as to cover this light emitting surface.

In Fig. 8, numbers are given to the individual light emitting elements, and reference numerals are not given to the light emitting elements other than the first light emitting element 52-1 and the thirteenth light emitting element 52-13. For example, the light emitting element that is denoted by 7 means a seventh light emitting element 52-7.

The respective light emitting elements define current circuits via control lines 53 between the headlamp control unit 20 and themselves. In Fig. 8, the illustration of control lines 53 is omitted for the light emitting elements other than the first light emitting element 52-1 and the thirteenth light emitting element 52-13. The headlamp control unit 20 can control the luminous intensities of the respective light emitting elements when they are turned on or off and turned on by regulating the amount of current that is supplied through the control lines 53.

Also, in the vehicle headlamp control system 11 according this embodiment, by the circuit board 50 being mounted in the other opening portion of the holder 46, the light emitting element unit 49 is disposed in an interior of the holder 46. When the plurality of light emitting elements provided in the light emitting element unit 49 are individually illuminated, their images are projected on to an imaginary vertical screen ahead of the lamp.

A left headlamp unit 22L has a transversely symmetrical configuration with a right headlamp unit 22R, and hence, the detailed description of the left headlamp unit 22L will be omitted. Note that also in the left headlamp unit 22L, a first light emitting element 52-1 to a thirteenth light emitting element 52-13 are arranged sideways in that order from the right-hand side to the left-hand side of the vehicle. Namely, as to internal configurations of second lamp units 38, the left headlamp unit 22L and the right headlamp unit 22R are not transversely symmetrical with each other.

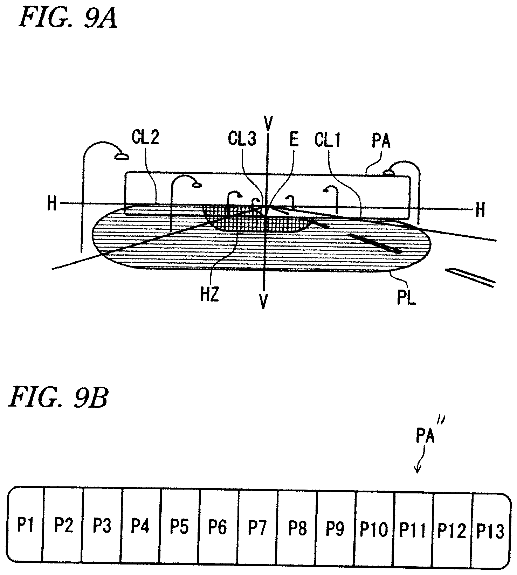

Fig. 9A is a light distribution pattern that is formed on an imaginary vertical screen that is placed in a position 25 m ahead of the vehicle, for example, by light shone to the front from the right headlamp unit 22R and the left headlamp unit 22L.

A low beam light distribution pattern PL is formed by combining illumination light shone from a first lamp unit 36 of the right headlamp unit 22R and illumination light shone from a first lamp unit 36 of the left headlamp unit 22L. The low beam light distribution pattern PL is a low beam light distribution pattern for the left-hand side traffic and has a first cut-off line CL1 to a third cut-off line CL3 along an upper edge thereof. The first cut-off line CL1 to the third cut-off line CL3 extend in a horizontal direction to be staggered across a V-V line, as a boundary, that is a vertical line passing through a vanishing point in the direction of the front of the lamp.

The first cut-off line CL1 is used as an oncoming lane cut-off line. The third cut-off line CL3 extends obliquely upwards towards the left from a left end portion of the first cut-off line CL1. The second cut-off line CL2 extends over an H-H line on a left-hand side of a point of intersection between the third cut-off line CL3 and the H-H line. Namely, the second cut-off line CL2 is used as a cut-off line for a lane for the subject vehicle.

In the low beam light distribution pattern PL, a hot zone HZ, which is a high luminous intensity area, is formed so as to surround an elbow point E, which is a point of intersection between the first cut-off line CL1 and the V-V line, the elbow point E being positioned to lie slightly leftwards.

An additional light distribution pattern PA corresponds to an illumination range of the invention and is defined as a light distribution pattern that is formed by illumination light shone from all the light emitting elements provided in the second lamp units 38 of the right headlamp unit 22R and the left headlamp unit 22L.

The additional light distribution pattern PA includes the horizontal line (the H-H line) and is formed into a belt-like shape which extends in the horizontal direction so that a lower edge is positioned on the first cut-off line CL1. Thus, the second lamp units 38 may be such as to function as a high beam light source.

A relation between the additional light distribution pattern PA and the light emitting element array 52 is shown in Fig. 9B. In this example, the additional light distribution pattern PA is divided into 13 partial areas which each have substantially the same shape and surface area and includes partial areas P1 to P13.

The partial area P1 is formed as a combination of projected images of light source images of the first light emitting element 52-1 of the right headlamp unit 22R and the first light emitting element 52-1 of the left headlamp unit 22L. In other words, the partial area P1 is formed by combing illumination light shone from these light emitting elements. This is true with the other partial areas, and they are each formed by combining illumination light shone from the corresponding light emitting elements of the left and right headlamp units 22.

For example, the partial area P9 is formed by combining illumination light shone from the left and right ninth light emitting elements 52-9. Since illumination light shone from the respective light emitting elements passes through a projection lens 48, the arrangement of the partial areas and the arrangement of the light emitting elements shown in Fig. 8 are reversed vertically and horizontally.

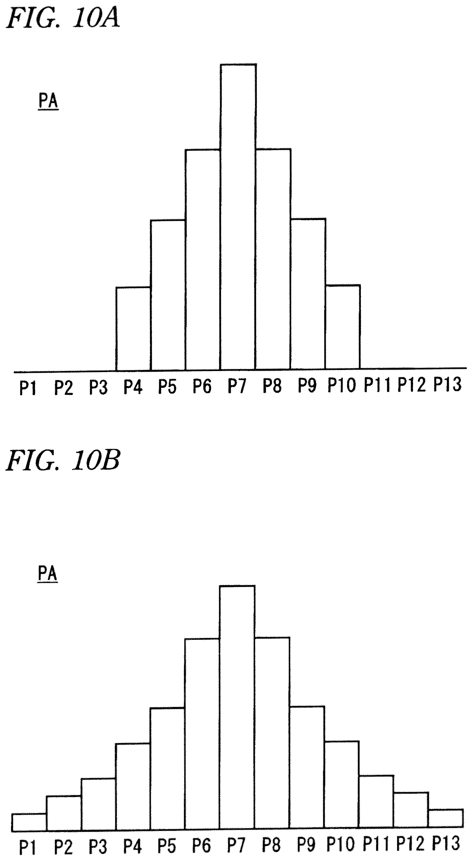

Next, referring to Fig. 10A and 10B, a dimming control will be described that is performed by the vehicle headlamp control system 11 that is configured as described heretofore.

In general, the front field of view of the driver changes with the driving speed of the vehicle 10, and there is a tendency that the field of view gets narrower as the vehicle speed increases, whereas the field of view gets wider as the vehicle speed decreases. Consequently, it is required that the whole of the field of view of the driver is illuminated appropriately as the field of view so changes.

Then, with the vehicle headlamp control system 11 of this embodiment, a control operation is enabled in which a size of an illuminated area that is formed in the additional light distribution pattern PA changes with the driving speed of the vehicle 10. Specifically, the control is made so that the area of the illuminated area decreases as the driving speed of the vehicle 10 increases.

Specifically, an integrated control unit 14 increases or decreases amounts of currents that flow to the light emitting elements of the left and right headlamp units 22 through the headlamp control unit 20 based on signals inputted thereinto from wheel speed sensors 16 to thereby change the luminous intensity of illumination light shone from the light emitting elements. By doing this, the illuminance of each of the partial areas is adjusted, whereby the area of the illuminated area within the additional light distribution pattern PA is changed.

Shown in Fig. 10A is a diagram showing an example of an illuminance distribution of the partial areas P1 to P13 within the additional light distribution pattern PA when the vehicle is driven at high speeds. Longer bar graphs denote higher illuminance. Additionally, the illuminance of the respective partial areas is related equivalently to the amounts of currents that are supplied to the light emitting elements that shine light to the relevant partial areas. Therefore, the diagram in Fig. 10A also represents values of currents that are supplied to the light emitting elements which correspond to the respective partial areas, the longer bar graphs denoting larger current values.

Namely, in the illuminated state described above, the illuminated area is formed so that the area near the elbow point E is illuminated most brightly and the illuminance is lowered as the partial areas spread horizontally sideways away from the elbow point E. Note that in this case, the illuminated area is limited to a range from the partial areas P4 to P10. This is based on the premise that the field of view of the driver who drives the vehicle at high speeds is accommodated within that range.

Shown in Fig. 10B is a diagram showing an example of an illuminance distribution of the partial areas P1 to P13 within the additional light distribution pattern PA when the vehicle 10 is driven at low speeds. Since the front field of view of the driver gets wider in association with reduction in driving speed of the vehicle 10, all the partial areas P1 to P13 constitute the illuminated area so that the whole of the front field of view of the driver that so gets wider are illuminated. In this case, too, the area lying near the elbow point E is illuminated most brightly and the illuminance is lowered as the partial areas spread horizontally sideways away from the elbow point E.

In the vehicle headlamp control system 11 according to this embodiment, a control is made so that the total amount of currents supplied to the light emitting elements that correspond to the illuminated area of the vehicle headlamp 12 is maintained before and after the change in illuminated area. For example, when the illuminated state is shifted from the illuminated state shown in Fig. 10A to the illuminated state shown in Fig. 10B, the partial areas P1 to P3 and P11 to P13 are made to be part of the illuminated area so as to increase the illuminated area, while the illuminance of the partial areas P4 to P10 is lowered. Consequently, the areas of the bar graphs in Fig. 10A and 10B coincide with each other.

Namely, when the vehicle is driven at low speeds, the field of view of the driver that gets wider can fully be illuminated, while when the vehicle is driven at high speeds, the field of view of the driver that gets narrower can be illuminated with high luminous intensity. In shining illumination light with high luminous intensity, since the total amount of currents flowing to the respective light emitting elements is not changed, it is possible to avoid the electric power load that drives the light emitting element unit 49 being increased.

Consequently, the whole field of view of the driver that changes with the driving speed of the vehicle 10 can be illuminated appropriately and efficiently. Additionally, since changing the illuminated area is implemented only by controlling the amounts of currents flowing to the respective light emitting elements, the necessity is obviated of additionally providing an optical mechanism for converging or diffusing illumination light in the lamp unit.

A configuration can be adopted in which the two light distribution patterns shown in Fig. 10A and 10B are stored in advance in the integrated control unit 14 or the headlamp control unit 20 so that the two light distribution patterns or illuminated states can be switched therebetween when the driving speed that is detected by the wheel speed sensors 16 reaches a predetermined threshold. A speed threshold at which the illuminated state shown in Fig. 10B is switched to the illuminated state shown in Fig. 10A when accelerating the vehicle 10 may differ from or coincide with a speed threshold at which the illuminated state shown in Fig. 10A is switched to the illuminated state shown in Fig. 10B when decelerating the vehicle 10.

In addition, a configuration may be adopted in which the illuminated area continually changes with driving speed between the light distribution patterns shown in Fig. 10A and 10B. In this case, a function or table that represents a relation between the driving speed of the vehicle 10 and current amounts that are supplied to the light emitting elements corresponding individually to the partial areas is stored in advance in the integrated control unit 14 or the headlamp control unit 20 so that current amounts to be supplied individually to the light emitting elements may be determined according to the driving speed of the vehicle 10 detected by the wheel speed sensors 16.

Additionally, a configuration may be adopted in which in addition to or in place of the information inputted from the wheel speed sensors 16, information inputted from a navigation system 19 is used as information based on which the integrated control unit 14 changes the illuminated area. For example, the integrated control unit 14 determines whether the vehicle 10 is being driven on an express way or being driven in an urban area based on information on vehicle position that is inputted from the navigation system 19. As this occurs, in case it is determined that the vehicle 10 is being driven on the express way, the light distribution pattern shown in Fig. 10A and in which the illuminated area is narrow should be selected, whereas in case it is determined that the vehicle 10 is being driven in the urban area, the light distribution pattern shown in Fig. 10B and in which the illuminated area is wide should be selected.

In addition, in the vehicle headlamp control system 11 according to this embodiment, an electronic swivel control is enabled in which the illuminated area formed by the headlamp is swivel shifted horizontally sideways within the additional light distribution pattern PA so as to follow a change in steering angle of the vehicle 10.

The integrated control unit 14 changes the luminous intensity of illumination light by increasing or decreasing the amounts of currents flowing to the respective light emitting elements of the left and right headlamp units 22 via the headlamp control unit 20 based on signals inputted from the wheel speed sensors 16 and a steering angle sensor 17. By doing this, the illuminance of each partial area is adjusted, whereby the illuminance distribution within the additional light distribution pattern PA is changed. By executing this adjustment as required, the illuminated area which is a collection of the partial areas that are illuminated shifts horizontally sideways within the additional light distribution pattern PA, which can provide the same effect as that provided by the swivel mechanism for mechanically swiveling optical axes of the respective lamps of the headlamp units 22.

As the electronic swivel control, there are two methods (modes): a method (a first mode) of shifting sideways the position of the illuminated area within the additional light distribution pattern PA with the illuminance distribution in the illuminated area maintained and a method (a second mode) of changing the illuminance distribution within the illuminated area with the position of the illuminated area kept fixed within the additional light distribution pattern PA.

In the vehicle headlamp control system 11 according to this embodiment, the integrated control unit 14 selects either of the first mode and the second mode according to the driving speed of the vehicle 10 that is detected by the wheel speed sensors 16. Specifically, the integrated control unit 14 selects the first mode when the driving speed of the vehicle 10 is high, while the integrated control unit 14 selects the second mode when the driving speed of the vehicle 10 is low.

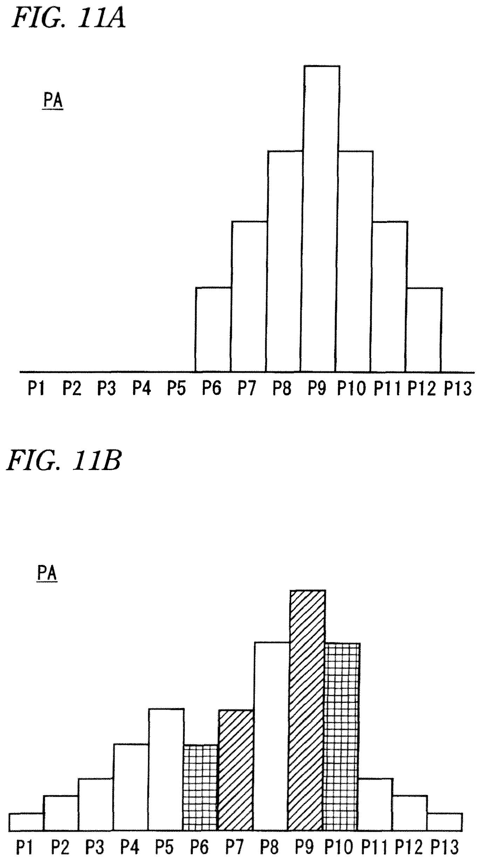

Shown in Fig. 11A is a diagram showing one example of an illuminance distribution of the partial areas P1 to P13 within the additional light distribution pattern PA when the electronic swivel control is executed with the vehicle 10 driven at high speeds. When the vehicle 10 is turned from the initial illuminated state shown in Fig. 10A, the electronic swivel control is executed so that the illuminated area is shifted rightwards within the additional light distribution pattern PA to give a highest illuminance to a predetermined location ahead of the vehicle 10 so turned.

In this example, the partial area having the highest illuminance within the illuminated area is swivel shifted from P7 to P9. Additionally, the whole of the illuminated area is shifted horizontally rightwards with the illuminance distribution within the illuminated area or the shape of bar graphs maintained. The illuminated area after the swivel shift ranges over the partial areas P6 to P12.

Since the illuminance distribution is maintained, a change in current amounts supplied to the light emitting elements that correspond to the illuminated area between before and after the swivel shift does not have to be taken into consideration. Since only the swivel shift amount according to a steering angle of the vehicle 10 detected by the steering angle sensor 17 should be taken into consideration, it is possible to avoid the increase in control load. Consequently, it is possible to change the light distributing direction while sufficiently following the turning of the vehicle during high speed driving.

Namely, not only a pattern of current supply amounts to the light emitting elements corresponding to the illuminance distribution shown in Fig. 10A but also a relation between the steering angle of he vehicle 10 that is detected by the steering angle 17 and the amount of swivel shift should be stored in advance in the integrated control unit 14 or the headlamp control unit 20 in the form of function or table.

Shown in Fig. 11B is a diagram showing one example of an illuminance distribution of the partial areas P1 to P13 within the additional light distribution pattern PA when the electronic swivel control is executed with the vehicle 10 driven at low speeds. When the vehicle 10 is turned from the initial illuminated state shown in Fig. 10B, the electronic swivel control is executed so that the illuminated area is shifted leftwards within the additional light distribution pattern PA to give a highest illuminance to a predetermined location ahead of the vehicle 10 so turned.

To describe this in greater detail, the illuminance is switched between the partial area P7 and the partial area P9 and the illuminance is switched between the partial P6 and the partial area P10, whereby the illumination distribution within the illuminated area is changed. In other partial areas than these partial areas just mentioned above, the illuminance resulting before the execution of the swivel control is still maintained, and as a result, the total amount of currents supplied to the light emitting elements is not changed between before and after the change in illumination distribution.

Namely, in this example, as an area having a predetermined illuminance within the illuminated area, the partial area having the highest illuminance is shifted from P7 (a first position) to P9 (a second position), and the partial area having the second highest illuminance is shifted from P6 (a first position) to P10 (a second position). Then, the illuminance of the other partial areas than these first positions and the second positions is maintained.

In this way, by executing the control to shift selectively only the partial areas where the illuminance is relatively high, a larger change in distribution can be obtained while suppressing the number of light emitting elements associated with the change in current amount to a least number. Consequently, the change in light distributing direction that is preferable for the driver can be realized with the minimum control load.

From the viewpoint that the effective change in illuminance distribution is obtained with less control amount, the partial area having the predetermined illuminance that is to be shifted can be limited to the partial area having the highest illuminance. Additionally, when there are a plurality of partial areas that satisfy the conditions, all the partial areas may be shifted or only partial areas having a larger shift amount may be shifted.

Therefore, according to the vehicle headlamp control system 11 according to this embodiment, the efficient electronic swivel control can be executed while illuminating appropriately and efficiently the whole of the field of view of the driver that changes with the driving speed of the vehicle 10. In addition, since the swivel shifting of the illuminated area is performed only by controlling the amounts of currents that are supplied to the light emitting elements, the necessity is obviated of providing additionally the swivel mechanism for mechanically swiveling the lamp unit.

The switching between the two modes in the electronic swivel control can be made to be executed when the driving speed detected by the wheel speed sensors 16 reaches a predetermined threshold. This threshold may be the same as or different from the thresholds that are referred to in executing the switching of the light distribution patterns (illuminated areas) that is described with reference to Fig. 10A and 10B. Additionally, this threshold can also be applied to a case where the illuminated area continually changes between the illuminated states shown in Fig. 10A and 10B.

Namely, the illuminance distribution in the illuminated area can be changed as shown in Fig. 11B while fixing the position of the illuminated area within the additional light distribution pattern PA shown in Fig. 10A. Additionally, the position of the illuminated area within the additional light distribution pattern PA can also be shifted as shown in Fig. 11A while maintaining the illuminance distribution of an illuminated area that is slightly wider the illuminated area shown in Fig. 10A.

Additionally, a configuration may be adopted in which in addition to or in place of the information inputted from the wheel speed sensors 16, information inputted from a navigation system 19 is used as information based on which the integrated control unit 14 switches the two modes for selection. For example, the integrated control unit 14 determines whether the vehicle 10 is being driven on an express way or being driven in an urban area based on information on vehicle position that is inputted from the navigation system 19. As this occurs, a configuration may be adopted in which in case it is determined that the vehicle 10 is being driven on the express way, the first mode shown in Fig. 11A is selected, whereas in case it is determined that the vehicle 10 is being driven in the urban area, the second mode shown in Fig. 11B is selected.

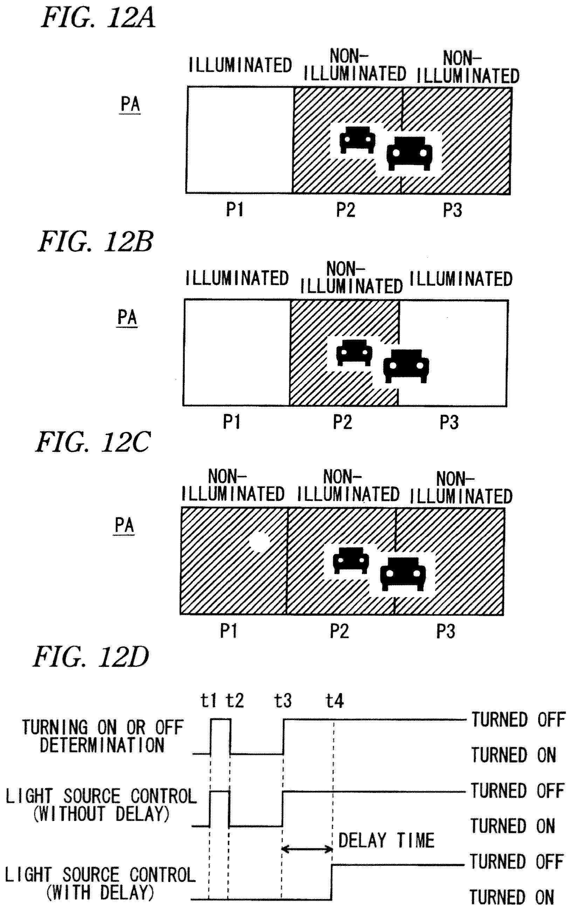

Next, referring to Fig. 12A to 12D, a vehicle headlamp control system 11 according to another example will be described. This vehicle headlamp control system 11 differs from the vehicle headlamp control system 11 according to the first embodiment with respect to a dimming control that is executed by an integrated control unit 14 and a headlamp control unit 20. The other configurations remain the same as those of the first embodiment, and therefore, the detailed description thereof will be omitted here.

The dimming control of the vehicle headlamp control system 11 according to this example relates to the suppression of glare. Namely, when a vehicle (a preceding vehicle or an oncoming vehicle) is located in a certain partial area within an additional light distribution pattern PA, the partial area is put into a non-illuminated state by turning off a light source that corresponds to the relevant partial area so as to prevent the dazzling of the driver of the vehicle.

For example, as shown in Fig. 12A, when the integrated control unit 14 analyzes image data inputted thereinto from a camera 18 to thereby determine that vehicles exist in partial areas P2 and P3 within the additional light distribution pattern PA, light emitting elements 52-2 and 52-3 that correspond to the partial areas to be put into a non-illuminated state are turned off.

The determination on existence of a vehicle is executed by detecting a bright point such as a headlight that is contained in a captured image captured by the camera 18. However, errors may be made in detecting such a bright point.

For example, in Fig. 12B, since a headlight of a vehicle contained in a partial area P3 is not detected accordingly, the partial area that should originally be put into a non-illuminated state is kept illuminated. Additionally, in Fig. 12C, since a bright point that has nothing to do with a vehicle is detected in a partial area P1, the partial area that should originally be illuminated is put into a non-illuminated state.

The error in the turning on or off control shown in Fig. 12C can be explained by Fig. 12D. When a bright point is detected temporarily (between time t1 to time t2) in the partial area P1, the integrated control unit 14 determines that the light emitting element 52-1 that corresponds to the partial area P1 should be turned off. When the headlamp control unit 20 receives the result of the determination as it is, the partial area P1 is put into a non-illuminated state only from time t1 to time t2, and the driver recognizes this as flickering of illumination within the additional light distribution pattern PA".

Then, in this example, a configuration is adopted in which only when a certain period of time elapses after the integrated control unit 14 determines that a light emitting element that corresponds to a certain partial area needs to be turned on or off, the headlamp control unit 20 executes a turning on or off control on the relevant light emitting element based on the result of the determination by the integrated control unit 14. This certain period of time is referred to as a delay time.

For example, in Fig. 12D, let's assume that the integrated control unit 14 determines that the partial area needs to be turned off at time t3. Here, the headlamp control unit 20 executes the turning off control on the relevant light emitting element only where there occurs no change in the result of the determination until the delay time (between time t3 to time t4) elapses. A change in the result of the determination such as the change in the result of the determination that occurred from time t1 to time t2 that occurs within a period of time that does not satisfy the delay time is ignored. By doing this, noise that would otherwise be mixed into the image data is eliminated, whereby a stable turning on or off control can be executed.

Note that the delay time can be determined by a time timed by an internal timer provided in the integrated control unit 14 or the number of frames in the image data that the integrated control unit 14 receives from the camera 18.

However, since the relative position between the subject vehicle and the preceding vehicle changes largely when the vehicle is driven at high speeds, there sometimes occurs a situation in which the quick following of the turning on or off control is interrupted by the existence of the delay time. Then, in this embodiment, when the vehicle is driven at high speeds or the vehicle is turned largely, the integrated control unit 14 is made to shorten or cancel the delay time. Specifically, when one of two cases is established, the two cases being a case where the driving speed of the vehicle 10 detected by the wheel speed sensors 16 exceeds a predetermined threshold and a case where the turning angular velocity of the vehicle 10 detected by the steering angle sensor 17 exceeds a predetermined threshold, the integrated control unit 14 shortens or cancels the delay time.

Additionally, a configuration may be adopted in which no specific threshold is provided for the driving speed and the turning angular velocity of the vehicle, and a function or table that represents a relation between those parameters and the delay time is stored in advance in the integrated control unit 14, so that the delay time is continually changed between an initial value and zero according to the driving conditions of the vehicle.

According to the above configuration, when the vehicle is driven normally, the mixing of determination noise is eliminated as much as possible and the turning on or off control can be executed stably for suppressing glare. Additionally, when the relative position between the subject vehicle and the preceding vehicle changes largely within a short period of time, the turning on or off control of the light emitting elements can be made to follow the change well.

Note that in addition to or in place of the image data inputted from the camera 18, obstacle data that is acquired by a front sensor such as a laser sensor, not shown, may be used to determine on the existence of a preceding or oncoming vehicle.

Additionally, in addition to or in place of the information inputted from the wheel speed sensors 16 and the steering angle sensor 17, the integrated control unit 14 may be made to change the delay time based on information inputted from the navigation system 19. For example, a configuration may be adopted in which when the integrated control unit 14 determines that the vehicle 10 is being driven in an area where there are many winding roads based on information on the position of the vehicle that is inputted from the navigation system 19, the shortening or canceling of the delay time is executed.

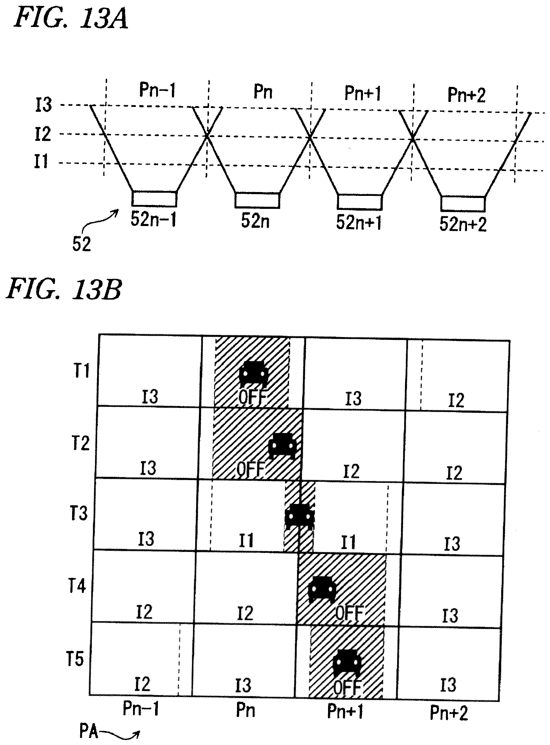

Next, referring to Figs. 13A and 13B, a vehicle headlamp control system 11 according to a further example will be described. The vehicle headlamp control system 11 according to this example differs from the vehicle headlamp control system 11 according to the previous example with respect to a dimming control executed by an integrated control unit 14 and a headlamp control unit 20. Since the other configurations remain the same as those of the previous example, the detailed description thereof will be omitted here. The dimming control executed by the vehicle headlamp control system 11 according to this example relates to the suppression of glare to which the previous example relates.

For example, as shown in Fig. 12A, when a control is made so that light emitting elements corresponding to partial areas where detected vehicles are contained are turned off, there may occur a situation in which depending upon the positions of the vehicles, a range wider than actually needed to be in a non-illuminated state is put into a non-illuminated state, causing a risk of reducing the forward visibility.

Specifically, when only a right-hand side vehicle is detected in Fig. 12A, partial areas P2 and P3 between which the vehicle in question straddles are put into a non-illuminated state, and therefore, the visibility over a relatively wide range is lowered. In addition, when a vehicle located relatively far away (a left-hand side vehicle in Fig. 12A) is detected near a right end of the partial area P2 to thereby put the partial area P2 into a non-illuminated state, the visibility over a relatively wide range extending as far as a left end of the partial area P2 is lowered. Then, in the dimming control by the vehicle headlamp control system 11 according to this embodiment, by controlling the amount of currents supplied to light emitting elements that correspond to the partial area where the vehicle is detected and the partial area lying adjacent thereto, the width of the non-illuminated area becomes as narrow as possible.

Shown in Fig. 13A is a diagram showing a relation between the amount of currents supplied to light emitting elements that make up a light emitting element array 52 in the vehicle headlamp control system 11 according to this example and widths of areas that can be illuminated by light illuminated by the amount of currents.

In this diagram, vertical broken lines denote boundaries between partial areas, and four partial areas Pn-1, Pn, Pn+1, Pn+2 are shown as being aligned sideways. Horizontal broken lines denote values of currents. A current value I2 is larger than 11, and a current value 13 is larger than 12. A light emitting element corresponding to the partial area Pn is denoted by 52n as a matter of convenience. Similarly, light emitting elements corresponding individually to the partial areas Pn-1, Pn+1, Pn+2 are denoted 52n-1, 52n+1, 52n+2, respectively.

To describe the dimming control by taking for example the light emitting element associated with the partial area Pn, it is shown that when a current I2 is supplied to the light emitting element in question, the whole of the partial area Pn is illuminated. When a current I1 is supplied thereto, only part of the partial area Pn is illuminated. When a current I3 is supplied to the light emitting element, in addition to the whole of the partial area Pn, portions of the partial areas Pn-1 and Pn+1 which lie adjacent to the partial area Pn are also illuminated. This is true with the other light emitting elements shown in the same diagram.

Fig. 13B is a diagram for illustrating a change with time of a turning on or off control on each of the partial areas. The diagram shows how a vehicle detected in the partial area Pn is shifted to the partial area Pn+1 over a time period from time T1 to T5.

Since the vehicle is detected at the center of the partial area Pn at time T1, the light emitting element 52n that corresponds to the partial area in question is turned off. As this occurs, the current I3 is supplied to the light emitting elements 52n-1 and 52n+1 that correspond, respectively, to the partial areas Pn-1 and Pn+1 which are lie adjacent to the partial area Pn, whereby a range wider the respective partial areas is illuminated. By doing this, both side end portions of the partial area Pn are illuminated, whereby the width of the non-illuminated area where the detected vehicle is contained can be made as small as possible.

The current I2 is supplied to the light emitting element 52n+2 that corresponds to the partial area Pn+2 that is not adjacent to the partial area where the vehicle is detected, whereby the whole of the partial area is illuminated as normal. Illumination light shone from the light emitting element 52n+1 is shone on to a left end portion of the partial area Pn+2 where the illumination light overlaps illumination light shone from the light emitting element 52n+2.

The vehicle is detected near a right end portion of the partial area Pn at time T2. Then, the light emitting element 52n corresponding to the partial area in question is turned off. Here, when the current I3 is supplied to the light emitting element 52n+1 that corresponds to the partial area Pn+1 which lies adjacent to a right-hand side of the partial area Pn, the illuminated area comes to contain the vehicle. Therefore, the whole of the partial area Pn+1 is illuminated by supply the current 12 thereto.

On the other hand, the current I3 is supplied to the light emitting element 52n-1 that corresponds to the partial area Pn-1 which lies adjacent to a left-hand side of the partial area Pn, so that the illuminated area contains a left end portion of the partial area Pn. By doing this, the width of the non-illuminated are existing on a left-hand side of the vehicle is made as small as possible.

The vehicle is detected in a position which straddles between the partial areas Pn and Pn+1 at time T3. Here, in the event that the light emitting elements that correspond to both the partial areas are turned off, the width of a resulting non-illuminated area becomes too wide, the visibility around the perimeter of the vehicle being thereby lowered largely. Then, the current I1 is supplied to the light emitting elements 52n and 52n+1 that corresponds to the partial areas in question, so that only portions of the partial areas are illuminated.

By doing this, both side end portions of the partial areas Pn and Pn+1 are put into a non-illuminated state. Further, the current I3 is supplied to the light emitting elements 52n-1 and 52n+2 which correspond, respectively, to the partial areas Pn-1 and Pn+2 which lie adjacent, respectively, to the partial areas Pn and Pn+1, whereby a non-illuminated area is prevented from being generated at the left end portion of the partial area Pn and a right end portion of the partial area Pn+1.

Consequently, only the right end portion of the partial area Pn and a left end portion of the partial area Pn+1 are made into a non-illuminated area, whereby the width of the non-illuminated area that contains the vehicle can be made as small as possible. The advantage of the dimming control of this example becomes most conspicuous here.

The vehicle is detected near the left end portion of the partial area Pn+1 at time T4. Consequently, the light emitting element 52+1 corresponding to the partial area in question is turned off. Here, when the current I3 is supplied to the light emitting element 52n corresponding to the partial area Pn which lies adjacent to the left-hand side of the partial area Pn+1, a resulting illuminated area contains the vehicle, and therefore, the current I2 is supplied thereto so as to illuminate the whole of the partial area Pn.

On the other hand, the current I3 is supplied to the light emitting element 52n+2 corresponding to the partial area Pn+2 which lies adjacent to the right-hand side of the partial area Pn+1, so that a resulting illuminated area contains the right end portion of the partial area Pn+1. By doing this, the width of the non-illuminated area existing on the right-hand side of the vehicle is made as small as possible.

The vehicle is detected at the center of the partial area Pn+1 at time T 5, and therefore, the light emitting element 52n+1 corresponding to the partial area in question is turned off. As this occurs, the current I3 is supplied to the light emitting elements 52n and 52n+2 that correspond to the partial areas Pn and Pn+2 which lie adjacent, respectively, to the partial area Pn+1. whereby a range wider than the respective partial areas is illuminated. By doing this, both the side end portions of the partial area Pn+1 are illuminated, whereby the width of the non-illuminated area that contains the vehicle detected can be made as small as possible.

The current I2 is supplied to the light emitting element 52n-1 corresponding to the partial area Pn-1 which is not adjacent to the partial area where the vehicle is detected, whereby the whole of the partial area is illuminated as normal. Illumination light shone from the light emitting element 52n overlaps illumination light shone from the light emitting element 52n-1 at the right end portion of the partial area Pn-1.

Thus, as has been described heretofore, according to the dimming control of this embodiment, by making the width of the non-illuminated area that contains the vehicle detected as mall as possible, the reduction in visibility around the perimeter of the vehicle can be suppressed to an extreme extent while suppressing glare to the driver of the vehicle detected.

In this embodiment, any of the three current values I1, 12, I3 is made to be selected according to the position of the vehicle detected within the partial area. However, the current values do not have to take any discrete value. In case the relation between the position of the vehicle detected in the partial area and the amount of current that enables the position to be made into the non-illuminated area is stored in advance in the integrated control unit 14 or the headlamp control unit 20 in the form of a function or table, the current value can take a continuous value between the I1 and I3.

The embodiments that have been described heretofore limit the technical scope of the invention in any way. It is obvious to those skilled in the art to which the invention pertains that the invention can be modified or improved without departing from the scope of the invention as defined by the appended claims.

The number of partial areas that are contained in the additional light distribution pattern PA is not limited to the numbers described in the configurations. An arbitrary number two or larger can be selected or an arbitrary number of partial areas equal to two or more can be aligned in the horizontal direction (in the direction of the H-H line in Fig. 4A or 9A). Additionally, a configuration may be adopted in which a plurality of columns of partial areas are aligned in the vertical direction (in the direction of the V-V line in Fig. 4A or 9A).

The shape of the partial areas that are contained in the additional light distribution pattern PA is not limited to the configurations described above. At least one of the surface area and shape of the partial areas may differ from each other.

A light source that illuminates a specific partial area does not have to be provided in both the right headlamp unit 22R and the left headlamp unit 22L. At least one of the light sources which illuminate the partial areas is positioned arbitrarily in the vehicle 10, provided that a desired additional light distribution pattern PA is obtained and that a predetermined partial area can be illuminated. The first lamp units 36 that obtain the low beam light distribution pattern PL may be made of LED arrays as done in the second right lamp unit 38R and the second left lamp unit 38L. As this occurs, the low beam light distribution pattern PL is divided into a plurality of partial areas, and at least one of the partial areas can be switched to an illuminated area or a non-illuminated area. A configuration may be adopted in which a headlamp control unit 20 is provided in each of the right headlamp unit 22R and the left headlamp unit 22L.

## Claims

1. A vehicle headlamp control system (11) comprising:
a plurality of light sources (52L,52U); and
control means configured to control the illumination of light by the plurality of light sources (52L,52U) so as to form a predetermined illuminated area within an illumination range (PA;PA') that includes a plurality of partial areas (L1-L13,U1-U13;L1-L.13,U13,U45,U6,U78,U910,U1113), wherein
the control means has
a first control function in which the control means changes a difference in illuminance between partial areas (L1-L13,U1-U13;L1-L13,U13,U45,U6,U78,U910,U1113) that are contained in the illuminated area and that lie adjacent to each other before and after a swivel shift so as to shift sideways the illuminated area within the illumination range (PA;PA'),
a second control function in which the control means changes a size of the illuminated area according to a driving speed of the vehicle (10), the control system (11) being **characterised in that** the control means selects according to a driving speed of the vehicle (10) either of a first mode and a second mode, wherein in the first mode the position of the illuminated area within the illumination range (PA;PA') is swivel shifted while maintaining the same illuminance distribution within the illuminated area as before the shift, and in the second mode the illuminance distribution within the illuminated area is changed while maintaining the position of the illuminated area within the illumination range (PA;PA'), wherein in the second mode the control means executes the control so that a total amount of currents supplied to the light sources (52L,52U) that correspond to the illumination area before the change is maintained; **in that** the respective luminous intensities of the plurality of light sources (52L,52U) are controlled by regulating the supplied amount of current, and **in that**
in the second control function, the control means maintains a total amount of currents supplied to the light sources (52L,52U) that correspond to the illuminated area before the size change of the area.

2. The vehicle headlamp control system (11) according to Claim 1, wherein
the control means having the first control function are configured to control the illuminance of a predetermined partial area in an illuminated area after the swivel shift so that the illuminance is made higher than the illuminance of a partial area that corresponds to the predetermined partial area in the illuminated area before the swivel shift.

3. A vehicle headlamp control system (11) according to Claim 2, wherein
the control means having the first control function are configured to control the illuminance of the illuminated area so that the illuminance before the swivel shift coincides with the illuminance after the swivel shift.

4. A vehicle headlamp control system (11) according to Claim 2 or 3, wherein
the control means having the first control function are configured to control the illuminance so that the illuminance is increased more as the partial area lies closer to a position where a line of sight of the driver is predicted to exist.

5. A vehicle headlamp control system (11) according to any one of Claims 1 to 4, further comprising:
a storage unit configured to store in advance a plurality of illumination patterns of which illuminance distributions within illuminated areas after the swivel shift differ from each other, wherein
the control means having the first control function are configured to select one of the illumination patterns according to a driving condition of the vehicle (10).

6. A vehicle headlamp control system (11) according to any one of Claims 1 to 5, wherein
the plurality of light sources (52L,52U) is a light source for high beam.

7. The vehicle headlamp control system (11) according to Claim 1, wherein
the control means having the second control function are configured to control the area of the illuminated area so that the area becomes smaller as the driving speed becomes higher.

8. A vehicle headlamp control system (11) according to Claim 7, wherein
the control means execute a control to swivel shift the position of the illuminated area within the illumination range (PA;PA') while maintaining an illuminance distribution within the illuminated area when the driving speed exceeds a predetermined value.

9. A vehicle headlamp control system (11) according to Claim 7 or 8, wherein
the control means having the second control function are configured to change the illuminance distribution within the illuminated area while maintaining the position of the illuminated area within the illumination range (PA;PA') when the driving speed is lowered below the predetermined value and to maintain a total amount of currents supplied to the light sources (52L,52U) that correspond to the illuminated area before and after the change in illuminance distribution.

10. A vehicle headlamp control system (11) according to Claim 9, wherein
each of the partial areas (L1-L13,U1-U13;L1-L13,U13,U45,U6,U78,U910,U1113) is illuminated with light from at least one of the plurality of light sources (52L,52U), and wherein
the control means having the second control function are configured to shift a partial area having a predetermined illuminance from a first position to a second position within the illuminated area and to maintain the illuminance of other partial areas than those in the first and second positions to thereby change the illuminance distribution.

11. A vehicle headlamp control system (11) according to any one of Claims 7 to 10, wherein
the plurality of light sources (52L,52U) is a light source for high beam.

## Patentansprüche

1. Fahrzeugscheinwerfersteuerungssystem (11), umfassend:
eine Vielzahl von Lichtquellen (52L, 52U) und
Steuerungsmittel, die dazu ausgebildet sind, die Beleuchtung mit Licht durch die Vielzahl von Lichtquellen (52L, 52U) zu steuern, um so eine vorbestimmte beleuchtete Fläche innerhalb eines Beleuchtungsbereichs (PA; PA'), der eine Vielzahl von Teilflächen (L1-L13, U1-U13; L1-L13, U13, U45, U6, U78, U910, U1113) umfasst, zu bilden, wobei
die Steuerungsmittel aufweisen:
eine erste Steuerfunktion, bei der die Steuerungsmittel einen Unterschied in der Beleuchtungsstärke zwischen Teilflächen (L1-L13, U1-U13; L1-L13, U13, U45, U6, U78, U910, U1113), die in der beleuchteten Fläche enthalten sind und die einander benachbart liegen, vor und nach einer Schwenkverschiebung ändern, um so die beleuchtete Fläche innerhalb des Beleuchtungsbereichs (PA; PA') seitwärts zu verschieben,
eine zweite Steuerfunktion, bei der die Steuerungsmittel eine Größe der beleuchteten Fläche gemäß einer Fahrgeschwindigkeit des Fahrzeugs (10) ändern,
wobei das Steuerungssystem (11) **dadurch gekennzeichnet ist,**
**dass** die Steuerungsmittel gemäß einer Fahrgeschwindigkeit des Fahrzeugs (10), einen von einem ersten Modus und einem zweiten Modus auswählen, wobei in dem ersten Modus die Position der beleuchteten Fläche innerhalb des Beleuchtungsbereichs (PA; PA') schwenkverschoben wird, während dieselbe Beleuchtungsstärkenverteilung innerhalb der beleuchteten Fläche wie vor der Verschiebung beibehalten wird, und in dem zweiten Modus die Beleuchtungsstärkenverteilung innerhalb der beleuchteten Fläche geändert wird, während die Position der beleuchteten Fläche innerhalb des Beleuchtungsbereichs (PA, PA') beibehalten wird, wobei in dem zweiten Modus die Steuerungsmittel die Steuerung so ausführen, dass eine Gesamtmenge von Strömen, die den Lichtquellen (52L, 52U) zugeführt werden, welche der Beleuchtungsfläche vor der Änderung entsprechen, beibehalten wird,
**dass** die jeweiligen Lichtstärken der Vielzahl von Lichtquellen (52L, 52U) durch Regeln der zugeführten Strommenge gesteuert werden, und
**dass** bei der zweiten Steuerfunktion die Steuerungsmittel eine Gesamtmenge von Strömen beibehalten, die den Lichtquellen (52L, 52U), welche der beleuchteten Fläche vor der Größenänderung der Fläche entsprechen, zugeführt werden.

2. Fahrzeugscheinwerfersteuerungssystem (11) nach Anspruch 1, wobei
die Steuerungsmittel, welche die erste Steuerfunktion aufweisen, dazu ausgebildet sind, die Beleuchtungsstärke einer vorbestimmten Teilfläche in einer beleuchteten Fläche nach der Schwenkverschiebung so zu steuern, dass die Beleuchtungsstärke größer als die Beleuchtungsstärke einer Teilfläche gemacht wird, die der vorbestimmten Teilfläche in der beleuchteten Fläche vor der Schwenkverschiebung entspricht.

3. Fahrzeugscheinwerfersteuerungssystem (11) nach Anspruch 2, wobei
die Steuerungsmittel, welche die erste Steuerfunktion aufweisen, dazu ausgebildet sind, die Beleuchtungsstärke der beleuchteten Fläche zu so steuern, dass die Beleuchtungsstärke vor der Schwenkverschiebung mit der Beleuchtungsstärke nach der Schwenkverschiebung übereinstimmt.

4. Fahrzeugscheinwerfersteuerungssystem (11) nach Anspruch 2 oder 3, wobei
die Steuerungsmittel, welche die erste Steuerfunktion aufweisen, dazu ausgebildet sind, die Beleuchtungsstärke so zu steuern, dass die Beleuchtungsstärke stärker erhöht wird, je näher die Teilfläche einer Position liegt, für die vorhergesagt wird, dass dort eine Sichtlinie des Fahrzeuglenkers existiert.

5. Fahrzeugscheinwerfersteuerungssystem (11) nach einem beliebigen der Ansprüche 1 bis 4, ferner umfassend:
eine Speichereinheit, die dazu ausgebildet ist, im Voraus eine Vielzahl von Beleuchtungsmustern zu speichern, von denen Beleuchtungsverteilungen innerhalb beleuchteter Flächen nach der Schwenkverschiebung voneinander verschieden sind, wobei
die Steuerungsmittel, welche die erste Steuerfunktion aufweisen, dazu ausgebildet sind, gemäß einem Fahrzustand des Fahrzeugs (10) eines der Beleuchtungsmuster auszuwählen.

6. Fahrzeugscheinwerfersteuerungssystem (11) nach einem beliebigen der Ansprüche 1 bis 5, wobei
die Vielzahl von Lichtquellen (52L, 52U) eine Lichtquelle für Fernlicht ist.

7. Fahrzeugscheinwerfersteuerungssystem (11) nach Anspruch 1, wobei
die Steuerungsmittel, welche die zweite Steuerfunktion aufweisen, dazu ausgebildet sind, die Fläche der beleuchteten Fläche so zu steuern, dass die Fläche mit zunehmender Fahrgeschwindigkeit kleiner wird.

8. Fahrzeugscheinwerfersteuerungssystem (11) nach Anspruch 7, wobei
die Steuerungsmittel eine Steuerung durchführen, um die Position der beleuchteten Fläche innerhalb des Beleuchtungsbereichs (PA; PA') zu schwenkverschieben, während eine Beleuchtungsstärkenverteilung innerhalb der beleuchteten Fläche beibehalten wird, wenn die Fahrgeschwindigkeit einen vorbestimmten Wert übersteigt.

9. Fahrzeugscheinwerfersteuerungssystem (11) nach Anspruch 7 oder 8, wobei
die Steuerungsmittel, welche die zweite Steuerfunktion aufweisen, dazu ausgebildet sind, die Beleuchtungsstärkenverteilung innerhalb der beleuchteten Fläche zu ändern, während die Position der beleuchteten Fläche innerhalb des Beleuchtungsbereichs (PA, PA') beibehalten wird, wenn die Fahrgeschwindigkeit unter den vorbestimmten Wert gesenkt wird, und eine Gesamtmenge von Strömen beizubehalten, die den Lichtquellen (52L, 52U), welche der beleuchteten Fläche vor und nach der Änderung der Beleuchtungsstärkenverteilung entsprechen, zugeführt werden.

10. Fahrzeugscheinwerfersteuerungssystem (11) nach Anspruch 9, wobei
jede der Teilflächen (L1 -L13, U1-U13; L1-L13, U13, U45, U6, U78, U910, U1113) mit Licht von mindestens einer aus der Vielzahl von Lichtquellen (52L, 52U) beleuchtet wird, und wobei
die Steuerungsmittel, welche die zweite Steuerfunktion aufweisen, dazu ausgebildet sind, eine Teilfläche, die eine vorbestimmte Beleuchtungsstärke aufweist, von einer ersten Position zu einer zweiten Position innerhalb der beleuchteten Fläche zu verschieben und die Beleuchtungsstärke von anderen Teilflächen als jenen in der ersten und der zweiten Position beizubehalten, um dadurch die Beleuchtungsstärkenverteilung zu ändern.

11. Fahrzeugscheinwerfersteuerungssystem (11) nach einem beliebigen der Ansprüche 7 bis 10, wobei
die Vielzahl von Lichtquellen (52L, 52U) eine Lichtquelle für Fernlicht ist.

## Revendications

1. Système de commande de phare de véhicule (11) comprenant :
une pluralité de sources de lumière (52L, 52U) ; et
un moyen de commande configuré pour commander l'éclairage de lumière par la pluralité de sources de lumière (52L, 52U) afin de former une zone éclairée prédéterminée à l'intérieur d'une plage d'éclairage (PA ; PA') qui inclut une pluralité de zones partielles (L1-L13, U1-U13 ; L1-L13, U13, U45, U6, U78, U910, U1113), dans lequel
le moyen de commande possède
une première fonction de commande dans laquelle le moyen de commande modifie une différence d'éclairement entre des zones partielles (L1-L13, U1-U13 ; L1-L13, U13, U45, U6, U78, U910, U1113) qui sont contenues dans la zone éclairée et qui sont situées de manière adjacente les unes aux autres avant et après un décalage en pivotement afin de décaler latéralement la zone éclairée à l'intérieur de la plage d'éclairage (PA ; PA'),
une seconde fonction de commande dans laquelle le moyen de commande modifie une taille de la zone éclairée en fonction d'une vitesse de conduite du véhicule (10),
le système de commande (11) étant **caractérisé en ce que**
le moyen de commande sélectionne, en fonction d'une vitesse de conduite du véhicule (10), l'un d'un premier mode et d'un second mode, dans lequel dans le premier mode, la position de la zone éclairée à l'intérieur de la plage d'éclairage (PA ; PA') est décalée en pivotement tout en conservant la même distribution d'éclairement à l'intérieur de la zone éclairée qu'avant le décalage, et dans le second mode, la distribution d'éclairement à l'intérieur de la zone éclairée est modifiée tout en conservant la position de la zone éclairée à l'intérieur de la plage d'éclairage (PA ; PA'), dans lequel dans le second mode, le moyen de commande exécute la commande de sorte qu'une quantité totale de courants fournie aux sources de lumière (52L, 52U) qui correspondent à la zone d'éclairage avant la modification est conservée ; **en ce que**
les intensités lumineuses respectives de la pluralité de sources de lumière (52L, 52U) sont commandées par la régulation de la quantité de courant fournie, et **en ce que**
dans la seconde fonction de commande, le moyen de commande conserve une quantité totale des courants fournie aux sources de lumière (52L, 52U) qui correspondent à la zone éclairée avant la modification de taille de la zone.

2. Système de commande de phare de véhicule (11) selon la revendication 1, dans lequel
les moyens de commande ayant la première fonction de commande sont configurés pour commander l'éclairement d'une zone partielle prédéterminée dans une zone éclairée après le décalage en pivotement, de sorte que l'éclairement est rendu supérieur à l'éclairement d'une zone partielle qui correspond à la zone partielle prédéterminée dans la zone éclairée avant le décalage en pivotement.

3. Système de commande de phare de véhicule (11) selon la revendication 2, dans lequel
les moyens de commande ayant la première fonction de commande sont configurés pour commander l'éclairement de la zone éclairée de sorte que l'éclairement avant le décalage en pivotement coïncide avec l'éclairement après le décalage en pivotement.

4. Système de commande de phare de véhicule (11) selon la revendication 2 ou 3, dans lequel
les moyens de commande ayant la première fonction de commande sont configurés pour commander l'éclairement de sorte que l'éclairement est davantage augmenté à mesure que la zone partielle se situe davantage à proximité d'une position où une ligne de vision du conducteur est prédite pour exister.

5. Système de commande de phare de véhicule (11) selon l'une quelconque des revendications 1 à 4, comprenant en outre :
une unité de stockage configurée pour stocker à l'avance une pluralité de motifs d'éclairage dont les distributions d'éclairement à l'intérieur de zones éclairées après le décalage en pivotement diffèrent les unes des autres, dans lequel
les moyens de commande ayant la première fonction de commande sont configurés pour sélectionner l'un des motifs d'éclairage en fonction d'une condition de conduite du véhicule (10).

6. Système de commande de phare de véhicule (11) selon l'une quelconque des revendications 1 à 5, dans lequel
la pluralité de sources de lumière (52L, 52U) est une source de lumière pour feu de route.

7. Système de commande de phare de véhicule (11) selon la revendication 1, dans lequel
les moyens de commande ayant la seconde fonction de commande sont configurés pour commander l'aire de la zone éclairée afin que l'aire devienne plus petite à mesure que la vitesse de conduite augmente.

8. Système de commande de phare de véhicule (11) selon la revendication 7, dans lequel
les moyens de commande exécutent une commande pour décaler en pivotement la position de la zone éclairée à l'intérieur de la plage d'éclairage (PA ; PA') tout en conservant une distribution d'éclairement à l'intérieur de la zone éclairée lorsque la vitesse de conduite dépasse une valeur prédéterminée.

9. Système de commande de phare de véhicule (11) selon la revendication 7 ou 8, dans lequel
les moyens de commande ayant la seconde fonction de commande sont configurés pour modifier la distribution d'éclairement à l'intérieur de la zone éclairée tout en conservant la position de la zone éclairée à l'intérieur de la plage d'éclairage (PA; PA') lorsque la vitesse de conduite est abaissée au-dessous de la valeur prédéterminée et pour conserver une quantité totale des courants fournie aux sources de lumière (52L, 52U) qui correspondent à la zone éclairée avant et après la modification de la distribution d'éclairement.

10. Système de commande de phare de véhicule (11) selon la revendication 9, dans lequel chacune des zones partielles (L1-L13, U1-U13 ; L1-L13, U13, U45, U6, U78, U910, U1113) est éclairée avec une lumière provenant d'au moins l'une de la pluralité de sources de lumière (52L, 52U), et dans lequel
les moyens de commande ayant la seconde fonction de commande sont configurés pour décaler une zone partielle ayant un éclairement prédéterminé d'une première position à une seconde position à l'intérieur de la zone éclairée et pour conserver l'éclairement de zones partielles autres que celles des première et seconde positions pour ainsi modifier la distribution d'éclairement.

11. Système de commande de phare de véhicule (11) selon l'une quelconque des revendications 7 à 10, dans lequel
la pluralité de sources de lumière (52L, 52U) est une source de lumière pour feu de route.
